(19) Europäisches Patentamt
European Patent Office
Office européen des brevets

(11) EP 4 527 993 A1

(12) EUROPEAN PATENT APPLICATION

(43) Date of publication:
**26.03.2025 Bulletin 2025/13**

(21) Application number: **24195762.0**

(22) Date of filing: **22.08.2024**

(51) International Patent Classification (IPC):
***D01D 5/00*** *(2006.01)* ***D01F 6/62*** *(2006.01)*
***D01F 6/84*** *(2006.01)* ***D01F 6/92*** *(2006.01)*
***D04H 1/435*** *(2012.01)* ***D04H 1/728*** *(2012.01)*

(52) Cooperative Patent Classification (CPC):
**D01D 5/0038; D01D 5/0084; D01F 6/62; D01F 6/625; D01F 6/84; D01F 6/92; D04H 1/435; D04H 1/728**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.09.2023 KR 20230117456**

(71) Applicant: **SK leaveo Co., Ltd.**
**Gyeonggi-do 16338 (KR)**

(72) Inventors:
- **LEE, Hyeri**
**16338 Suwon-si, Gyeonggi-do (KR)**
- **KIM, Kyung Youn**
**16338 Suwon-si, Gyeonggi-do (KR)**
- **KIM, Seong Dong**
**16338 Suwon-si, Gyeonggi-do (KR)**
- **YOU, Kyoung Hwan**
**16338 Suwon-si, Gyeonggi-do (KR)**
- **KIM, Hoon**
**16338 Suwon-si, Gyeonggi-do (KR)**
- **BYEON, Jun Su**
**16338 Suwon-si, Gyeonggi-do (KR)**

(74) Representative: **Isarpatent**
**Patent- und Rechtsanwälte**
**Barth Hassa Peckmann & Partner mbB**
**Friedrichstraße 31**
**80801 München (DE)**

# (54) METHOD OF MANUFACTURING BIODEGRADABLE NONWOVEN FABRIC AND BIODEGRADABLE NONWOVEN FABRIC MANUFACTURED THEREBY

(57) Provided are a method of manufacturing a biodegradable nonwoven fabric and a biodegradable nonwoven fabric manufactured by the method. The method includes preparing a biodegradable resin solution including a biodegradable resin composition, which includes a first biodegradable resin, and an organic solvent. The biodegradable resin solution is then spinned by applying a voltage to the biodegradable resin solution. The first biodegradable resin includes diol, aromatic dicarboxylic acid, and aliphatic dicarboxylic acid.

FIG. 3

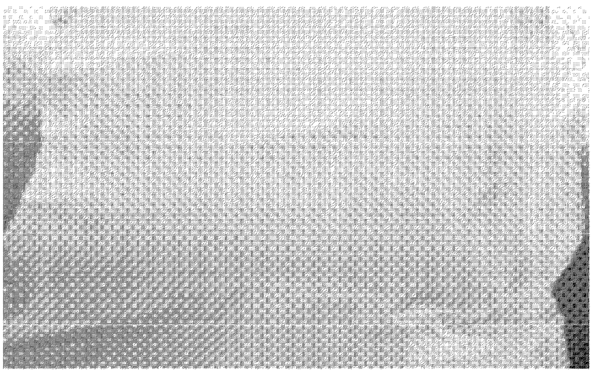

EP 4 527 993 A1

## Description

## BACKGROUND

### Technical Field

Embodiments of the present invention generally relate to a method of manufacturing a biodegradable nonwoven fabric and a biodegradable nonwoven fabric manufactured thereby.

### Related Art

Recently, as concerns about environmental problems have increased, solutions to the disposal issues of various household goods, especially disposable products, are required. Specifically, petroleum-based polymer materials are inexpensive and have excellent processability, so they are widely used to manufacture various products such as films, fibers, packaging materials, bottles, and containers. However, products made from the petroleum-based polymer materials emit harmful substances when incinerated at the end of their lifespan. In addition, depending on the types of products, it takes hundreds of years to completely decompose naturally.

To overcome these limitations of petroleum-based polymer materials, research is being actively conducted on biodegradable resins that decompose in a relatively short period. Polylactic acid (PLA), polybutylene adipate terephthalate (PBAT), and polybutylene succinate (PBS) are being introduced as biodegradable resins.

In particular, nonwoven fabric is a material that can be used in a variety of products, and the need for manufacturing eco-friendly nonwoven fabric is increasing. However, when fibers are manufactured using a biodegradable resin to produce nonwoven fabric, there is a complication that the fibers are easily cut or beads are formed. In addition, when using biodegradable resin as a raw material, it is difficult to implement a process of continuously manufacturing fibers, and quality deteriorates due to increased thickness or decreased uniformity of manufactured fibers.

## SUMMARY

Embodiments of the present invention have been made in view of the above concerns, and it is an object of the present invention to provide a biodegradable nonwoven fabric having excellent biodegradability and water resistance; and a method of manufacturing the biodegradable nonwoven fabric.

In accordance with an embodiment of the present invention, the above and other objects can be accomplished by the provision of a method of manufacturing a biodegradable nonwoven fabric, the method including preparing a biodegradable resin solution including a biodegradable resin composition, which includes a first biodegradable resin, and an organic solvent; and spinning the biodegradable resin solution by applying voltage to the biodegradable resin solution, wherein the first biodegradable resin includes diol, aromatic dicarboxylic acid, and aliphatic dicarboxylic acid.

In an embodiment of the present invention, in the spinning operation, a voltage of 15 kV to 30 kV may be applied to the biodegradable resin solution.

In an embodiment of the present invention, in the spinning operation, a release rate of the biodegradable resin solution may be 0.1 mL/min to 1.0 mL/min.

In an embodiment of the present invention, in the spinning operation, a first region for discharging the biodegradable resin solution; and a second region spaced apart from the first region in a gravity direction and including a yarn produced from the biodegradable resin solution discharged from the first region may be used, wherein a distance between the first and second regions is 100 mm to 500 mm.

In an embodiment of the present invention, the biodegradable resin composition may further include a second biodegradable resin, wherein the second biodegradable resin includes one or more selected from the group consisting of polybutylene succinate, polylactic acid, polybutylene adipate, polybutylene succinate-adipate, polybutylene succinate-terephthalate, polyhydroxybutyrate-valerate, polycaprolactone, and polybutylene succinate adipate terephthalate.

In an embodiment of the present invention, the biodegradable resin composition may include an applier, wherein the applier is included in a content of 10 ppm to 100 ppm based on a total weight of the biodegradable resin composition.

In an embodiment of the present invention, an electrical resistance of the biodegradable resin composition in a molten state may be 3 MΩ to 10 MS2.

In an embodiment of the present invention, the method may further include after spinning the biodegradable resin solution, drying the spun biodegradable resin solution.

In accordance with another embodiment of the present invention, there is provided a biodegradable nonwoven fabric, including: a first biodegradable resin including diol, aromatic dicarboxylic acid and aliphatic dicarboxylic acid; a biodegradable resin composition including the first biodegradable resin; and a yarn including the biodegradable resin composition and having a diameter of 50 nm to 1,000 nm, wherein the biodegradable resin composition has an electrical

resistance of 3 MΩ to 10 MS2 in a molten state.

In an embodiment of the present invention, the biodegradable nonwoven fabric may include an organic solvent in a content of 10 ppm or less based on a total weight of the yarn.

In an embodiment of the present invention, the yarn may include an processing additive.

In accordance with yet another embodiment of the present invention, there is provided a biodegradable resin composition, including a biodegradable resin including diol, aromatic dicarboxylic acid, and aliphatic dicarboxylic acid, wherein the biodegradable resin composition has an electrical resistance of 3 MΩ to 10 MS2 in a molten state.

In an embodiment of the present invention, the biodegradable resin composition may include an applier.

A biodegradable nonwoven fabric manufactured by a method of manufacturing a biodegradable nonwoven fabric according to the present invention includes a biodegradable resin, so it can be advantageously naturally biodegraded at the end of its lifespan, thereby not requiring incineration or not emitting harmful substances.

Using the method of manufacturing a biodegradable nonwoven fabric according to the present invention and a biodegradable nonwoven fabric manufactured thereby, a yarn can be manufactured through electrospinning, so that a yarn can be continuously produced from the biodegradable resin composition. Accordingly, a yarn having a nano-sized diameter can be efficiently manufactured. In addition, a biodegradable nonwoven fabric containing the yarn is lightweight and has a high surface area and porosity, so that it can be applied to products requiring moisture absorption.

## Brief Description of Drawings

FIG. 1 schematically illustrates an apparatus for preparing a biodegradable resin composition according to an embodiment of the present invention.

FIG. 2 schematically illustrates an apparatus for manufacturing a biodegradable nonwoven fabric by electrospinning an embodiment of the present invention.

FIG. 3 illustrates the photograph of a biodegradable nonwoven fabric manufactured in Example 1.

FIG. 4 illustrates the photograph of a biodegradable nonwoven fabric manufactured in Comparative Example 1.

## DETAILED DESCRIPTION

Structural or functional descriptions of embodiments disclosed in the present specification are merely illustrated for the purpose of describing the embodiments according to the technical idea of the present invention, embodiments according to the technical idea of the present invention may be implemented in various forms other than the embodiments disclosed in the present specification, and it is not to be construed that the technical idea of the present invention is limited to the embodiments described in the present specification.

In the present specification, when a certain component is "included", this indicates that only the component is included or the component may further include another component unless there is no different disclosure. In addition, it should be understood that all numerical ranges representing physical property values, dimensions, etc. of components described in the present specification are modified by the term 'about' in all cases unless otherwise specified. In addition, in this specification or application, 'ppm' refers to weight basis.

Hereinafter, a method of manufacturing a biodegradable nonwoven fabric according to the present invention and a biodegradable nonwoven fabric manufactured thereby are described.

The method of manufacturing a biodegradable nonwoven fabric according to the present invention includes an operation of preparing a biodegradable resin solution including a biodegradable resin composition, which contains a first biodegradable resin, and an organic solvent; and an operation of applying voltage to the biodegradable resin solution to emit the biodegradable resin solution, wherein the first biodegradable resin includes diol, aromatic dicarboxylic acid, and aliphatic dicarboxylic acid.

The method of manufacturing a biodegradable nonwoven fabric according to the present invention includes an operation of preparing a biodegradable resin solution including a biodegradable resin composition, which contains a first biodegradable resin, and an organic solvent.

The biodegradable resin composition includes the first biodegradable resin. The first biodegradable resin includes diol, aromatic dicarboxylic acid, and aliphatic dicarboxylic acid.

The first biodegradable resin may include a diol residue, an aromatic dicarboxylic acid residue and an aliphatic dicarboxylic acid residue. The diol residue may be derived from the diol, the aromatic dicarboxylic acid residue may be derived from the aromatic dicarboxylic acid, and the aliphatic dicarboxylic acid residue may be derived from the aliphatic dicarboxylic acid. The first biodegradable resin may include a diol component, an aromatic dicarboxylic acid component and an aliphatic dicarboxylic acid component. The diol component may be derived from the diol, the aromatic dicarboxylic acid component may be derived from the aromatic dicarboxylic acid, and the aliphatic dicarboxylic acid component may be

derived from the aliphatic dicarboxylic acid.

In this specification, the diol residue may also be referred to as diol. In this specification, the dicarboxylic acid residue may also be referred to as dicarboxylic acid. In this specification, the residue may also be expressed as a component.

The diol may be an aliphatic diol. The diol may be a bio-derived diol. The diol may be at least one selected from the group consisting of ethanediol, 1,2-propanediol, 1,3-propanediol, 2-methyl-1,3-propanediol, 2,2-dimethyl-1,3-propanediol, 2,2-diethyl-1,3-propanediol, 2-ethyl-2-isobutyl-1,3-propanediol, 1,2-butanediol, 1,4-butanediol, 1,5-pentanediol, 3-methyl-1,5-pentanediol, 2,2,4-trimethyl-1,3-pentanediol, 1,6-hexanediol, 2-ethyl-1,3-hexanediol, 2,4-dimethyl-2-ethyl-1,3-hexanediol, 2,2,4-trimethyl-1,6-hexanediol, 2-methyl-1,8-octanediol, 1,9-nonanediol, 1,10-decanediol and 1,12-octadecanediol or derivatives thereof.

The diol may be at least one selected from the group consisting of 1,4-butanediol, 1,2-ethanediol, 1,3-propanediol, diethylene glycol and neopentyl glycol or derivatives thereof.

The diol may be at least one selected from the group consisting of 1,4-butanediol, 1,2-ethanediol, 1,3-propanediol or derivatives thereof.

The diol may include 1,4-butanediol or a derivative thereof.

The aromatic dicarboxylic acid may be at least one selected from the group consisting of phthalic acid, terephthalic acid, isophthalic acid, 1,4-naphthalenedicarboxylic acid, 1,5-naphthalenedicarboxylic acid, 2,6-naphthalenedicarboxylic acid, 1,8-naphthalenedicarboxylic acid, 4,4'-diphenyl dicarboxylic acid, 4,4'-diphenyl ether dicarboxylic acid, anthracen dicarboxylic acid, and phenanthren dicarboxylic acid or derivatives thereof.

The aromatic dicarboxylic acid may be at least one selected from the group consisting of terephthalic acid, dimethyl terephthalate, 2,6-naphthalene dicarboxylic acid, isophthalic acid or derivatives thereof.

The aromatic dicarboxylic acid may include terephthalic acid, dimethyl terephthalate or a derivative thereof.

The aliphatic dicarboxylic acid may be at least one selected from the group consisting of oxalic acid, malonic acid, succinic acid, maleic acid, fumaric acid, glutaric acid, adipic acid, pimelic acid, serveric acid, azelaic acid, sebacic acid, dodecanedicarboxylic acid and 1,4-cyclohexanedicarboxylic acid or derivatives thereof.

The aliphatic dicarboxylic acid may be at least one selected from the group consisting of adipic acid, succinic acid and sebacic acid or derivatives thereof.

The aliphatic dicarboxylic acid may include an adipic acid or a derivative thereof.

In the first biodegradable resin, a molar ratio of all diol residues including the diol: all dicarboxylic acid residues including the aromatic dicarboxylic acid and the aliphatic dicarboxylic acid may be about 1:0.9 to about 1:1.1. A molar ratio of the all diol residues: the all dicarboxylic acid residues may be about 1:0.95 to about 1:1.05.

In the first biodegradable resin, a molar ratio of the aromatic dicarboxylic acid residue: the aliphatic dicarboxylic acid residue may be about 3:7 to about 7:3. In the first biodegradable resin, a molar ratio of the aromatic dicarboxylic acid residue: the aliphatic dicarboxylic acid residue may be about 3.3:6.7 to about 6.7:3.3. In the first biodegradable resin, a molar ratio of the aromatic dicarboxylic acid residue: the aliphatic dicarboxylic acid residue may be about 4:6 to about 6:4. In the first biodegradable resin, a molar ratio of the aromatic dicarboxylic acid residue: the aliphatic dicarboxylic acid residue may be about 4.2:5.8 to about 5:5.

The first biodegradable resin may include a diol residue derived from 1,4-butanediol in a content of about 90 mol% or more based on the total diols. The first biodegradable resin may include a diol residue derived from 1,4-butanediol in a content of about 95 mol% or more based on the total diols. The first biodegradable resin may include a diol residue derived from 1,4-butanediol in a content of about 98 mol% or more based on the total diols.

The first biodegradable resin may include an aromatic dicarboxylic acid residue derived from terephthalic acid or dimethyl terephthalate in a content of about 30 mol% to about 70 mol% based on the total dicarboxylic acids. The first biodegradable resin may include an aromatic dicarboxylic acid residue derived from terephthalic acid or dimethyl terephthalate in a content of about 35 mol% to about 65 mol% based on the total dicarboxylic acids. The first biodegradable resin may include a dicarboxylic acid residue derived from terephthalic acid or dimethyl terephthalate in a content of about 40 mol% to about 60 mol% based on the total dicarboxylic acids. The first biodegradable resin may include an aromatic dicarboxylic acid residue derived from terephthalic acid or dimethyl terephthalate in a content of about 43 mol% to about 53 mol% based on the total dicarboxylic acids.

The first biodegradable resin may include an aliphatic dicarboxylic acid residue derived from adipic acid in a content of about 30 mol% to about 70 mol% based on the total dicarboxylic acids. The first biodegradable resin may include an aliphatic dicarboxylic acid residue derived from adipic acid in a content of about 35 mol% to about 65 mol% based on the total dicarboxylic acids. The first biodegradable resin may include an aliphatic dicarboxylic acid residue derived from adipic acid in a content of about 40 mol% to about 60 mol% based on the total dicarboxylic acids. The first biodegradable resin may include an aliphatic dicarboxylic acid residue derived from adipic acid in a content of about 47 mol% to about 57 mol% based on the total dicarboxylic acids.

The first biodegradable resin may include a first block and a second block. The first biodegradable resin may have a molecular structure in which the first block and the second block are alternately bonded.

The first block may include the diol residue and the aromatic dicarboxylic acid residue. The first block may be formed by esterification of the diol and the aromatic dicarboxylic acid. The first block may include only the diol residue and the aromatic dicarboxylic acid residue. The first block may include only repeating units formed by the esterification of the diol and the aromatic dicarboxylic acid. That is, the first block may mean the sum of repeating units of the diol and the aromatic dicarboxylic acid before being combined with the aliphatic dicarboxylic acid.

The second block may include the diol residue and the aliphatic dicarboxylic acid residue. The second block may be formed by esterification of the diol and the aliphatic dicarboxylic acid. The second block may include only the diol residue and the aliphatic dicarboxylic acid residue. The second block may include only repeating units formed by the esterification of the diol and the aliphatic dicarboxylic acid. That is, the second block may mean the sum of repeating units of the diol and the aliphatic dicarboxylic acid before being combined with the aromatic dicarboxylic acid.

In the first biodegradable resin, a ratio (X/Y) of the number (X) of the first blocks to the number (Y) of the second blocks may be about 0.5 to about 1.5. In the first biodegradable resin, a ratio (X/Y) of the number (X) of the first blocks to the number (Y) of the second blocks may be about 0.6 to about 1.4. In the first biodegradable resin, a ratio (X/Y) of the number (X) of the first blocks to the number (Y) of the second blocks may be about 0.7 to about 1.3. In the first biodegradable resin, a ratio (X/Y) of the number (X) of the first blocks to the number (Y) of the second blocks may be about 0.75 to about 1.2. In addition, In the first biodegradable resin, a ratio (X/Y) of the number (X) of the first blocks to the number (Y) of the second blocks may be 0.8 to 1. In the first biodegradable resin, the number of the first blocks may be smaller than the number of the second blocks.

The number of the first blocks may be about 30 to about 300. The number of the first blocks may be about 40 to about 250. The number of the first blocks may be about 50 to about 220. The number of the first blocks may be about 60 to about 200. The number of the first blocks may be about 70 to about 200. The number of the first blocks may be about 75 to about 200.

The number of the first blocks may vary depending upon the content of the aromatic dicarboxylic acid, the molecular weight of the first biodegradable resin and an alternating ratio to be described below. That is, the number of the first blocks may increase as a molar ratio of the aromatic dicarboxylic acid increases, as the molecular weight of the first biodegradable resin increases, and as an alternating ratio to be described below increases.

The number of the second blocks may be about 30 to about 300. The number of the second blocks may be about 40 to about 250. The number of the second blocks may be about 50 to about 220. The number of the second blocks may be about 60 to about 200. The number of the second blocks may be about 70 to about 200. The number of the second blocks may be about 75 to about 200.

The number of the second blocks may depend upon the content of the aliphatic dicarboxylic acid, the molecular weight of the first biodegradable resin and an alternation degree to be described below.

When the first biodegradable resin includes the first and second blocks within the above ranges, the biodegradable nonwoven fabric according to the present invention may have appropriate biodegradability and appropriate mechanical strength or stated otherwise an improved balance of biodegradability and mechanical strength. In addition, when the first biodegradable resin includes the first and second blocks within the above ranges, the biodegradable nonwoven fabric may have improved flexibility.

When the first biodegradable resin includes the first and second blocks within the above ranges, the biodegradable nonwoven fabric according to the present invention may have appropriate biodegradability while having appropriate durability against UV rays, etc. The first block may be represented by Formula 1 below:

Formula 1

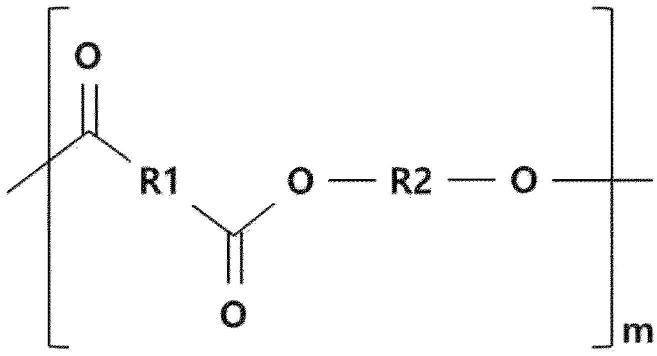

In Formula 1, R1 may be a substituted or unsubstituted arylene group having 6 to 20 carbon atoms, R2 may be a substituted or unsubstituted alkylene group having 1 to 20 carbon atoms, and m may be 1 to 20.

R1 may be a substituted or unsubstituted phenylene group, and R2 may be a butylene group.

The second block may be represented by Formula 2 below:

Formula 2

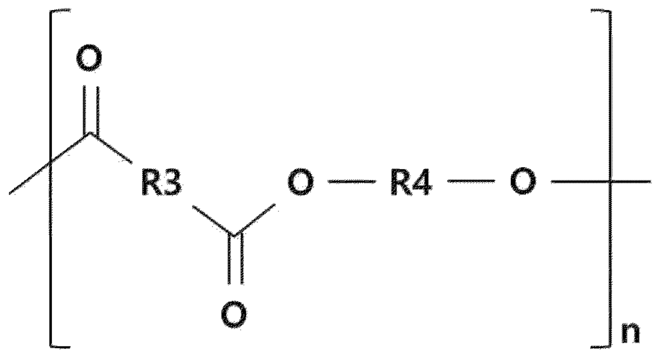

In Formula 2, R3 and R4 may be each independently a substituted or unsubstituted alkylene group having 1 to 20 carbon atoms, and n may be 1 to 20.

R3 and R4 may be a butylene group.

The first biodegradable resin may have a structure in which the first block and the second block are alternately bonded to each other. The first biodegradable resin may be represented by Formula 3 below:

Formula 3

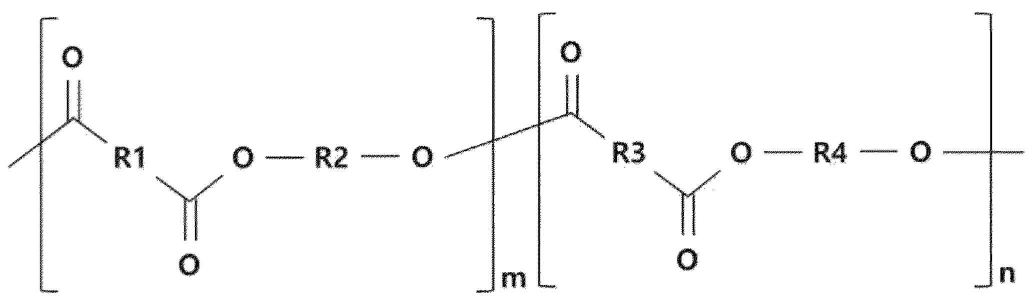

In Formula 3, R1 may be a substituted or unsubstituted arylene group having 6 to 20 carbon atoms, R2 may be a substituted or unsubstituted alkylene group having 1 to 20 carbon atoms, and m may be 1 to 20. In addition, R3 and R4 are each independently a substituted or unsubstituted alkylene group having 1 to 20 carbon atoms, and n is 1 to 20.

The diol residue may include a residue of 1,4-butanediol or a derivative thereof, the aromatic dicarboxylic acid residue may include a residue of terephthalic acid or a derivative thereof, and the aliphatic dicarboxylic acid residue may include a residue of adipic acid or a derivative thereof.

For example, the first biodegradable resin may include a first block including a residue of 1,4-butanediol or a derivative thereof and a residue of terephthalic acid or a derivative thereof.

Alternatively, the first biodegradable resin may include a first block including a residue of 1,4-butanediol or a derivative thereof and a residue of dimethyl terephthalate or a derivative thereof.

The first biodegradable resin may include a second block including a residue of 1,4-butanediol or a derivative thereof and a residue of adipic acid or a derivative thereof.

Alternatively, the first biodegradable resin may include a second block including a residue of 1,4-butanediol or a derivative thereof and a residue of succinic acid or a derivative thereof.

The first biodegradable resin according to an embodiment of the present disclosure may include a first block including a residue of 1,4-butanediol or a derivative thereof and a residue of terephthalic acid or a derivative thereof; and a second block including a residue of 1,4-butanediol or a derivative thereof and a residue of adipic acid or a derivative thereof.

The first block may be represented by Formula 4 below, and the second block may be represented by Formula 5 below:

Formula 4

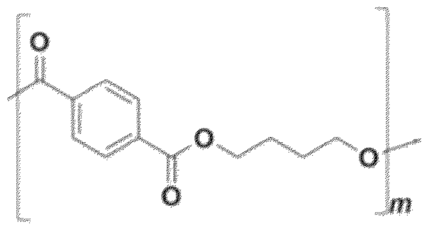

In Formula 4, m may be 1 to 20.

Formula 5

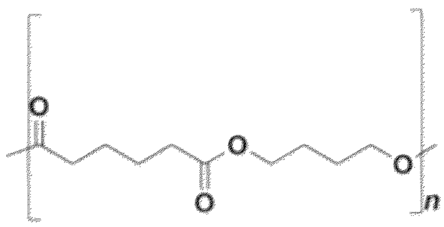

In Formula 5, n may be 1 to 20.

The first biodegradable resin may be represented by Formula 6 below:

Formula 6

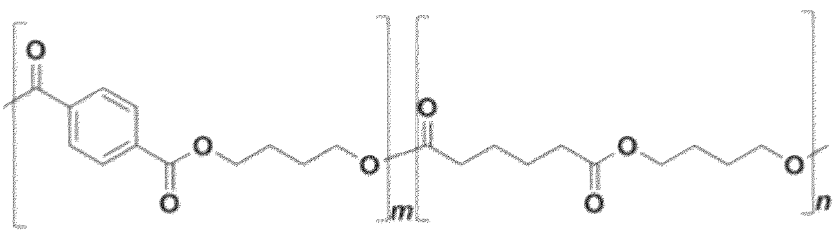

In Formula 6, m may be 1 to 20, and n may be 1 to 20.

When the first block and the second block satisfy the constitution, it may be more advantageous to provide a

biodegradable nonwoven fabric having excellent biodegradability and water degradability and improved properties.

In addition, when the first biodegradable resin includes the first block and second block within the above ranges, the biodegradable nonwoven fabric according to the present invention may have appropriate mechanical properties and appropriate UV resistance.

Since the first and second blocks have the above-described characteristics, the mechanical properties of the biodegradable nonwoven fabric according to the present invention may be improved.

Since the first and second blocks have the above-described characteristics, the biodegradable nonwoven fabric according to the present invention may have appropriate UV resistance.

Since the first and second blocks have the above-described characteristics, the biodegradable nonwoven fabric according to the present invention may have appropriate biodegradation rate.

Since the first and second blocks have the above-described characteristics, the biodegradable nonwoven fabric according to the present invention may have an appropriate biodegradation rate and improved UV resistance.

The first biodegradable resin may include the following Bond Structures 1 to 3:

Bond Structure 1

Aromatic dicarboxylic acid - diol - aliphatic dicarboxylic acid -

Bond Structure 2

Aromatic dicarboxylic acid - diol - aromatic dicarboxylic acid -

Bond Structure 3

Aliphatic dicarboxylic acid - diol - aliphatic dicarboxylic acid -

The diol included in Bond Structure 1 is positioned between the aromatic dicarboxylic acid and the aliphatic dicarboxylic acid and bonded to the aromatic dicarboxylic acid and the aliphatic dicarboxylic acid. The diol included in Bond Structure 1 may be positioned between the aromatic dicarboxylic acid and the aliphatic dicarboxylic acid and directly esterification-bonded to the aromatic dicarboxylic acid and the aliphatic dicarboxylic acid.

In addition, the diol included in Bond Structure 2 is positioned between the two aromatic dicarboxylic acids (may also be referred to as first and second aromatic dicarboxylic acids) and bonded to both the aromatic dicarboxylic acids. The diol included in Bond Structure 2 may be positioned between the two aromatic dicarboxylic acids and directly esterification-bonded to both aromatic dicarboxylic acids.

In addition, the diol included in Bond Structure 3 is positioned between the two aliphatic dicarboxylic acids and bonded to both of the aliphatic dicarboxylic acids. The diol included in Bond Structure 3 may be positioned between the two aliphatic dicarboxylic acids and directly esterification-bonded to both the aliphatic dicarboxylic acids.

In the first biodegradable resin, Bond Structure 1 may be represented by Formula 7 below:

Formula 7

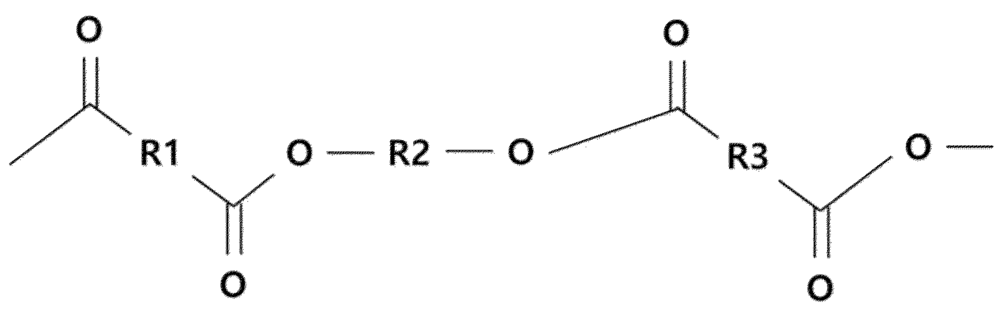

In Formula 7, R1 is a substituted or unsubstituted arylene group having 6 to 20 carbon atoms, R2 is a substituted or unsubstituted alkylene group having 1 to 20 carbon atoms, and R3 is a substituted or unsubstituted alkylene group having 1 to 20 carbon atoms.

In the first biodegradable resin, Bond Structure 2 may be represented by Formula 8 below:

Formula 8

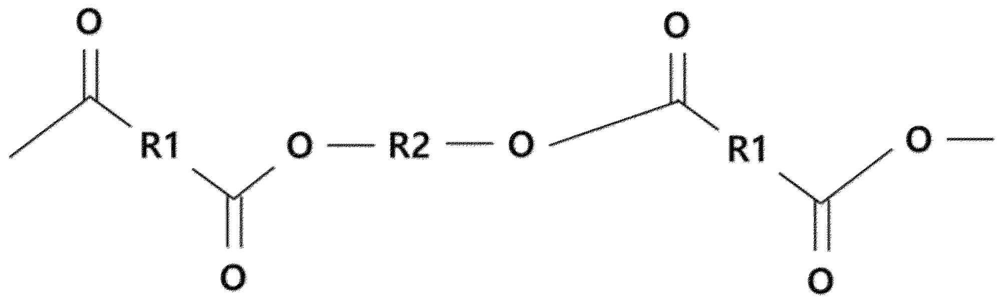

In Formula 8, R1 is a substituted or unsubstituted arylene group having 6 to 20 carbon atoms, and R2 is a substituted or unsubstituted alkylene group having 1 to 20 carbon atoms.

In the first biodegradable resin, Bond Structure 3 may be represented by Formula 9 below:

Formula 9

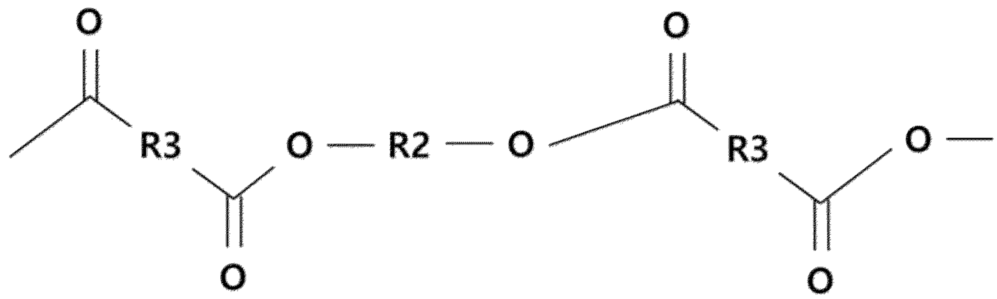

In Formula 9, R2 is a substituted or unsubstituted alkylene group having 1 to 20 carbon atoms, and R3 is a substituted or unsubstituted alkylene group having 1 to 20 carbon atoms.

In addition, Bond Structure 1 may be represented by Formula 10 below:

Formula 10

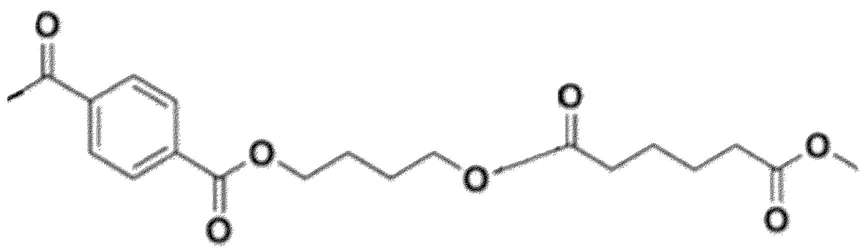

In addition, Bond Structure 2 may be represented by Formula 11 below.

Formula 11

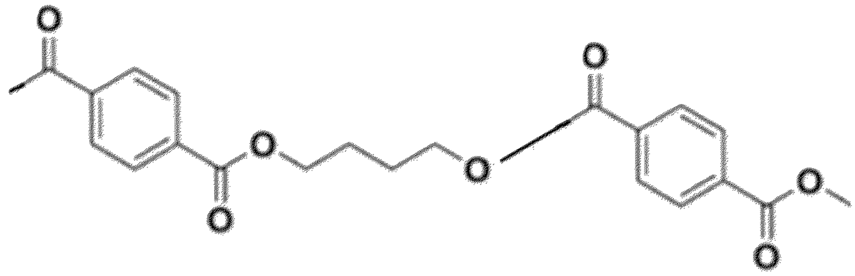

In addition, Bond Structure 3 may be represented by Formula 12 below:

Formula 12

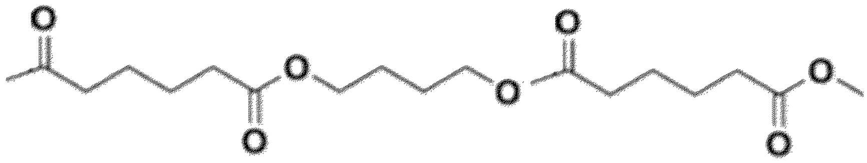

The first biodegradable resin may have an alternating ratio.

The alternating ratio refers to a ratio of a diol bonded between the aromatic dicarboxylic acid and the aliphatic dicarboxylic acid among the diols. That is, the alternating ratio may be a ratio of a diol included in Bonding Structure 1 among the diols. The alternating ratio may be obtained by dividing the number of moles of a diol included in Bonding Structure 1 by the sum of the number of moles of a diol included in Bonding Structure 1, the number of moles of a diol included in Bonding Structure 2 and the number of moles of a diol included in Bonding Structure 3.

That is, the alternating ratio may be a ratio of a diol bonded between the heterogeneous dicarboxylic acids among the total diols.

The alternating ratio may be calculated according to Equation 1 below:

Equation 1:

$$\text{Alternating ratio} = \frac{DM1}{DM1 + DM2 + DM3}$$

In Equation 1, DM1 is a molar ratio of a diol included in Bonding Structure 1, DM2 is a molar ratio of a diol included in Bonding Structure 2, and DM3 is a molar ratio of a diol included in Bonding Structure 3.

In the first biodegradable resin, the alternating ratio may be about 0.3 to about 0.7. In the first biodegradable resin, the alternating ratio may be about 0.37 to about 0.59. In the first biodegradable resin, the alternating ratio may be about 0.4 to about 0.56. In the first biodegradable resin, the alternating ratio may be about 0.45 to about 0.53.

In addition, the first biodegradable resin may include a hard segment ratio.

The hard segment ratio refers to a ratio of a diol bonded between the aromatic dicarboxylic acid and the aromatic dicarboxylic acid among the diols.

The hard segment ratio may be a molar ratio of a diol included in Bonding Structure 2 among the total diols. The hard segment ratio may be obtained by dividing the number of moles of a diol included in Bonding Structure 2 by the sum of the number of moles of a diol included in Bonding Structure 1, the number of moles of a diol included in Bonding Structure 2 and the number of moles of a diol included in Bonding Structure 3.

The hard segment ratio may be represented by Equation 2 below:

Equation 2:

$$\text{Hard segment ratio} = \frac{DM2}{DM1 + DM2 + DM3}$$

In Equation 2, DM1 is a molar ratio of a diol included in Bonding Structure 1, DM2 is a molar ratio of a diol included in Bonding Structure 2, and DM3 is a molar ratio of a diol included in Bonding Structure 3.

The hard segment ratio may be about 0.15 to about 0.35. The hard segment ratio may be about 0.2 to about 0.3. The hard segment ratio may be about 0.21 to about 0.29. The hard segment ratio may be about 0.22 to about 0.28.

In addition, the first biodegradable resin may include soft segments.

A soft segment ratio refers to a ratio of a diol bonded between the aliphatic dicarboxylic acid and the aliphatic dicarboxylic acid among the diols.

The soft segment ratio may be a molar ratio of a diol included in Bonding Structure 3 among the total diols. The soft segment ratio may be obtained by dividing the number of moles of a diol included in Bonding Structure 3 by the sum of the number of moles of a diol included in Bonding Structure 1, the number of moles of a diol included in Bonding Structure 2 and the number of moles of a diol included in Bonding Structure 3.

The soft segment ratio may be represented by Equation 3 below:

Equation 3

$$\text{Soft segment ratio} = \frac{DM3}{DM1 + DM2 + DM3}$$

In Equation 3, DM1 is a molar ratio of a diol included in Bonding Structure 1, DM2 is a molar ratio of a diol included in Bonding Structure 2, and DM3 is a molar ratio of a diol included in Bonding Structure 3.

The soft segment ratio may be about 0.16 to about 0.36. The soft segment ratio may be about 0.21 to about 0.31. The soft segment ratio may be about 0.22 to about 0.30. The hard segment ratio may be about 0.23 to about 0.29.

The soft segment ratio may be larger than the hard segment ratio.

A ratio of the hard segments to the soft segments may be about 0.92 to about 0.99. That is, DM2 divided by DM3 may be about 0.92 to about 0.99.

The alternating ratio, the hard segment ratio and the soft segment ratio may be measured by nuclear magnetic resonance spectroscopy. The first biodegradable resin may be dissolved in a solvent such as $CDCl3$, and may be analyzed by $^1H$-NMR and/or $^{13}C$-NMR analysis using a nuclear magnetic resonance (NMR) instrument at room temperature.

When the diol is 1,4-butanediol, the aromatic dicarboxylic acid is terephthalic acid or dimethyl terephthalate, and the aliphatic dicarboxylic acid is adipic acid, analysis of the first biodegradable resin by the nuclear magnetic resonance spectroscopy may include a first peak, a second peak, a third peak, a fourth peak, a fifth peak, a sixth peak, a seventh peak, an eighth peak, a ninth peak, a tenth peak, and an eleventh peak.

For example, when the diol is 1,4-butanediol, the aromatic dicarboxylic acid is terephthalic acid or dimethyl terephthalate, and the aliphatic dicarboxylic acid is adipic acid, analysis of the first biodegradable resin by the nuclear magnetic resonance spectroscopy may include a peak derived from the diol of Bonding Structure 1, a peak derived from the diol of Bonding Structure 2 and a peak derived from the diol of Bonding Structure 3 at about 3.5 ppm to about 4.6 ppm.

In a range of about 3.5 ppm to about 4.6 ppm, the first peak, the second peak, the third peak and the fourth peak may be defined in order from high ppm to low ppm. In addition, in a range of about -3.4 ppm to about -4.3 ppm based on the ppm of the ninth peak, the first peak, the second peak, the third peak and the fourth peak may be defined in order from high ppm to low ppm. Here, the first peak may be derived from the diol included in the second bonding unit, the second peak and the third peak may be derived from the diol included in the first bonding unit, and the fourth peak may be derived from the diol included in the third bonding unit.

The - ppm direction may be an upfield direction or a shielded direction. For example, -3.4 ppm may mean a position of 3.4 ppm in an upfield direction. For example, -3.4 ppm may mean a position of 3.4 ppm in a shielded direction.

In addition, analysis of the first biodegradable resin by the nuclear magnetic resonance spectroscopy may include a peak derived from the diol of Bonding Structure 1, a peak derived from the diol of Bonding Structure 2 and a peak derived from the diol of Bonding Structure 3 also at about 1.0 ppm to about 2.5 ppm.

In a range of about 1.0 ppm to about 2.5 ppm, the tenth peak, the fifth peak, the sixth peak, the seventh peak, the eighth peak and the eleventh peak may be defined in order from high ppm to low ppm. In a range of about -6.0 ppm to about -6.7 ppm based on the ppm of the ninth peak, the fifth peak, the sixth peak, the seventh peak, the eighth peak and the

eleventh peak may be defined in order from high ppm to low ppm. Here, the fifth peak may be derived from the diol included in the second bonding unit, the sixth peak and the seventh peak may be derived from the diol included in the first bonding unit, and the eighth peak may be derived from the diol included in the third bonding unit.

In addition, in a range of about 7.5 ppm to about 8.5 ppm, the ninth peak may be formed. The ninth peak may be derived from the aromatic dicarboxylic acid. The ninth peak may be derived from an aromatic ring included in the aromatic dicarboxylic acid. The ninth peak may be derived from an aromatic ring included in the terephthalic acid or the dimethyl terephthalate.

The tenth peak and the eleventh peak may be derived from the aliphatic dicarboxylic acid. The tenth peak and the eleventh peak may be derived from the adipic acid.

The first peak may be located at about -3.6 ppm to about -3.68 ppm based on the ppm of the ninth peak. The second peak may be located at about -3.69 ppm to about -3.75 ppm based on the ppm of the ninth peak. The third peak may be located at about -3.9 ppm to about -3.97 ppm based on the ppm of the ninth peak. The fourth peak may be located at about -3.98 ppm to about -4.1 ppm based on the ppm of the ninth peak. The fifth peak may be located at about -6.0 ppm to about -6.19 ppm based on the ppm of the ninth peak. The sixth peak may be located at about -6.2 ppm to about -6.26 ppm based on the ppm of the ninth peak. The seventh peak may be located at about -6.27 ppm to about -6.34 ppm based on the ppm of the ninth peak. The eighth peak may be located at about -6.35 ppm to about -6.42 ppm based on the ppm of the ninth peak. The tenth peak may be located at about -5.6 ppm to about -5.8 ppm based on the ppm of the ninth peak. The eleventh peak may be located at about -6.421 ppm to about - 6.5 ppm based on the ppm of the ninth peak. The position of the ninth peak based on ppm may be the position of each peak when the position of the ninth peak is 0 ppm.

In addition, the areas of the first peak, the second peak, the third peak, the fourth peak, the fifth peak, the sixth peak, the seventh peak, the eighth peak, the tenth peak and the eleventh peak may be normalized based on the area of the ninth peak. That is, when the area of the ninth peak is 1, the areas of the first peak, the second peak, the third peak, the fourth peak, the fifth peak, the sixth peak, the seventh peak, the eighth peak, the tenth peak and the eleventh peak may be relatively determined.

The alternating ratio may be derived by Equation 4 or 5 below:

Equation 4:

$$\text{Alternating ratio} = \frac{PA2 + PA3}{PA1 + PA2 + PA3 + PA4}$$

In Equation 4, PA1 is the area of the first peak, PA2 is the area of the second peak, PA3 is the area of the third peak, and PA4 is the area of the fourth peak.

Equation 5:

$$\text{Alternating ratio} = \frac{PA6 + PA7}{PA5 + PA6 + PA7 + PA8}$$

In Equation 5, PA5 is the area of the fifth peak, PA6 is the area of the sixth peak, PA7 is the area of the seventh peak, and PA8 is the area of the eighth peak.

The hard segment ratio may be derived by Equation 6 or 7 below:

Equation 6:

$$\text{Hard segment ratio} = \frac{PA1}{PA1 + PA2 + PA3 + PA4}$$

In Equation 6, PA1 is the area of the first peak, PA2 is the area of the second peak, PA3 is the area of the third peak, and PA4 is the area of the fourth peak.

Equation 7:

$$\text{Hard segment ratio} = \frac{PA5}{PA5 + PA6 + PA7 + PA8}$$

In Equation 7, PA5 is the area of the fifth peak, PA6 is the area of the sixth peak, PA7 is the area of the seventh peak, and PA8 is the area of the eighth peak.

The soft segment ratio may be derived by Equation 8 or 9 below:

Equation 8:

$$\text{Soft segment ratio} = \frac{PA4}{PA1 + PA2 + PA3 + PA4}$$

In Equation 8, PA1 is the area of the first peak, PA2 is the area of the second peak, PA3 is the area of the third peak, and PA4 is the area of the fourth peak.

Equation 9

$$\text{Soft segment ratio} = \frac{PA8}{PA5 + PA6 + PA7 + PA8}$$

In Equation 9, PA5 is the area of the fifth peak, PA6 is the area of the sixth peak, PA7 is the area of the seventh peak, and PA8 is the area of the eighth peak.

The area of the first peak may be about 0.35 to about 0.6. The area of the first peak may be about 0.4 to about 0.55. The area of the first peak may be about 0.43 to about 0.5 The area of the first peak may be about 0.43 to about 0.52. The area of the first peak may be about 0.45 to about 0.49.

The area of the second peak may be about 0.37 to about 0.57. The area of the second peak may be about 0.41 to about 0.54. The area of the second peak may be about 0.45 to about 0.53. The area of the second peak may be about 0.45 to about 0.55. The area of the second peak may be about 0.47 to about 0.53.

The area of the third peak may be about 0.37 to about 0.57. The area of the third peak may be about 0.41 to about 0.54. The area of the third peak may be about 0.45 to about 0.53. The area of the third peak may be about 0.45 to about 0.55. The area of the third peak may be about 0.47 to about 0.53.

The area of the fourth peak may be about 0.4 to 0.7. The area of the fourth peak may be about 0.45 to about 0.65. The area of the fourth peak may be about 0.48 to about 0.6. The area of the fourth peak may be about 0.48 to 0.60. The area of the fourth peak may be about 0.50 to about 0.58.

The area of the fifth peak may be about 0.35 to about 0.6. The area of the fifth peak may be about 0.4 to about 0.55. The area of the fifth peak may be 0.43 to about 0.53. The area of the fifth peak may be about 0.43 to about 0.52. The area of the fifth peak may be about 0.45 to about 0.49.

The area of the sixth peak may be about 0.35 to about 0.6. The area of the sixth peak may be about 0.4 to about 0.55. The area of the sixth peak may be 0.43 to about 0.5. The area of the sixth peak may be about 0.45 to about 0.55. The area of the sixth peak may be about 0.47 to about 0.53.

The area of the seventh peak may be about 0.41 to about 0.71. The area of the seventh peak may be about 0.45 to about 0.65. The area of the seventh peak may be about 0.48 to about 0.6. The area of the seventh peak may be about 0.45 to about 0.55. The area of the seventh peak may be about 0.47 to about 0.53.

The area of the eighth peak may be about 0.4 to about 0.7. The area of the eighth peak may be about 0.45 to about 0.65. The area of the eighth peak may be about 0.48 to about 0.6. The area of the eighth peak may be about 0.48 to 0.60. The area of the eighth peak may be about 0.50 to about 0.58.

The area of the tenth peak may be about 0.7 to about 2.5. The area of the tenth peak may be 0.75 to about 2. The

area of the tenth peak may be 0.8 to about 1.5. The area of the tenth peak may be about 1.0 to about 1.15. The area of the tenth peak may be about 1.02 to about 1.13.

The area of the eleventh peak may be about 0.7 to about 3.5. The area of the eleventh peak may be about 0.7 to about 3. The area of the eleventh peak may be 0.8 to about 2.5. The area of the eleventh peak may be about 1.0 to about 1.15. The area of the eleventh peak may be about 1.02 to about 1.13.

In addition, the sum of the area of the first peak, the area of the second peak, the area of the third peak and the area of the fourth peak may be about 1.49 to about 2.44. The sum of the area of the first peak, the area of the second peak, the area of the third peak and the area of the fourth peak may be about 1.81 to about 2.16. The sum of the area of the first peak, the area of the second peak, the area of the third peak and the area of the fourth peak may be about 1.9 to about 2.2. The sum of the area of the first peak, the area of the second peak, the area of the third peak and the area of the fourth peak may be about 1.95 to about 2.1. Here, the sum of the area of the first peak, the area of the second peak, the area of the third peak and the area of the fourth peak may mean the sum of the total number of ester bonds based on the number of terephthalic acids.

The sum of the area of the second peak and the area of the third peak may be about 0.95 to about 1.10. The sum of the area of the second peak and the area of the third peak may be about 0.98 to about 1.07. Here, the sum of the area of the first peak and the area of the third peak may mean the degree of extension of molecular bonds of the first biodegradable resin.

A ratio (the area of the fourth peak/the area of the first peak) of the area of the fourth peak to the area of the first peak may be about 1.1 to about 1.3. A ratio of the area of the fourth peak to the area of the first peak may be about 0.67 to about 2.00. A ratio of the area of the fourth peak to the area of the first peak may be about 0.96 to about 1.40. A ratio of the area of the fourth peak to the area of the first peak may be about 1.15 to about 1.25. A ratio of the area of the fourth peak to the area of the first peak may mean a ratio of soft segments to hard segments in the molecular structure of the first biodegradable resin. That is, the first biodegradable resin becomes softer as the ratio of the area of the fourth peak to the area of the first peak increases.

A ratio (the area of the fourth peak/the area of the third peak) of the area of the fourth peak to the area of the third peak may be about 0.7 to about 1.89. A ratio of the area of the fourth peak to the area of the third peak may be about 0.91 to about 1.33. A ratio of the area of the fourth peak to the area of the third peak may be about 1.0 to about 1.2. A ratio of the area of the fourth peak to the area of the third peak may be about 1.01 to about 1.1.

A ratio (the area of the first peak/the area of the second peak) of the area of the first peak to the area of the second peak may be about 0.61 to about 1.62. A ratio of the area of the first peak to the area of the second peak may be about 0.81 to about 1.11. A ratio of the area of the first peak to the area of the second peak may be about 0.85 to about 0.95. A ratio of the area of the first peak to the area of the second peak may be about 0.86 to about 0.94.

In addition, a ratio (the area of the fifth peak/the area of the first peak) of the area of the fifth peak to the area of the first peak may be about 0.61 to about 1.71. A ratio of the area of the fifth peak to the area of the first peak may be about 0.96 to about 1.40. A ratio of the area of the fifth peak to the area of the first peak may be about 0.8 to about 1.2. A ratio of the area of the fifth peak to the area of the first peak may be about 0.9 to about 1.1.

In addition, a ratio (the area of the sixth peak/the area of the second peak) of the area of the sixth peak to the area of the second peak may be about 0.58 to about 1.71. A ratio of the area of the sixth peak to the area of the first peak may be about 0.86 to about 1.16. A ratio of the area of the sixth peak to the area of the first peak may be about 0.8 to about 1.2. A ratio of the area of the sixth peak to the area of the first peak may be about 0.9 to about 1.1.

In addition, a ratio (the area of the seventh peak/the area of the third peak) of the area of the seventh peak to the area of the third peak may be about 0.72 to about 1.92. A ratio of the area of the seventh peak to the area of the third peak may be about 0.91 to about 1.33. A ratio of the area of the seventh peak to the area of the third peak may be about 0.8 to about 1.2. A ratio of the area of the seventh peak to the area of the third peak may be about 0.9 to about 1.1.

In addition, a ratio (the area of the eighth peak/the area of the fourth peak) of the area of the eighth peak to the area of the fourth peak may be about 0.59 to about 1.75. A ratio of the area of the eighth peak to the area of the fourth peak may be about 0.80 to about 1.25. A ratio of the area of the eighth peak to the area of the fourth peak may be about 0.8 to about 1.2. A ratio of the area of the eighth peak to the area of the fourth peak may be about 0.9 to about 1.1.

Since the first biodegradable resin has the molecular structure as described above, the biodegradable nonwoven fabric according to the present invention may have excellent biodegradability and water degradability and improved physical properties.

In addition, since the first biodegradable resin has the molecular structure as described above, the biodegradable nonwoven fabric according to the present invention may have appropriate mechanical properties.

Since the first biodegradable resin has the molecular structure as described above, the biodegradable nonwoven fabric according to the present invention may have improved mechanical properties.

Since the first biodegradable resin has the molecular structure as described above, the biodegradable nonwoven fabric according to the present invention may have appropriate UV resistance.

Since the first and second blocks have the above-described characteristics, the biodegradable nonwoven fabric

according to the present invention may have an appropriate biodegradation rate.

The first biodegradable resin may further include a branching agent. The branching agent may include at least one selected from the group consisting of a trihydric or higher alcohol, an anhydride and a trihydric or higher carboxylic acid. The branching agent may react with the diol, the aromatic dicarboxylic acid and the aliphatic dicarboxylic acid. Accordingly, the branching agent may be included as a part of the molecular structure of the first biodegradable resin.

The trihydric or higher alcohol may be at least one selected from the group consisting of glycerol, pentaerythritol or trimethylolpropane.

The trihydric or higher carboxylic acid may be at least one selected from the group consisting of methane tricarboxylic acid, ethane tricarboxylic acid, citric acid, benzene-1,3,5-tricarboxylic acid, 5-sulfo-1,2,4-benzenetricarboxylic acid, ethane-1,1,2,2-tetracarboxylic acid, propane-1,1,2,3-tetracarboxylic acid, butane-1,2,3,4-tetracarboxylic acid, cyclopentane-1,2,3,4-tetracarboxylic acid and benzene-1,2,4,5-tetracarboxylic acid.

The anhydride may include at least one selected from the group consisting of trimellitic anhydride, succinic anhydride, methylsuccinic anhydride, ethylsuccinic anhydride, 2,3-butanedicarboxylic anhydride, 2,4-pentanedicarboxylic anhydride, 3,5-heptanedicarboxylic anhydride, 1,2,3,4-butanetetracarboxylic dianhydride, maleic anhydride, dodecylsuccinic anhydride and pyromellitic anhydride.

The branching agent may be included in a content of about 0.1 % by weight to about 5 % by weight in the first biodegradable resin based on the total amount of the first biodegradable resin. The branching agent may be included in a content of about 0.1 % by weight to about 3 % by weight in the first biodegradable resin based on the total amount of the first biodegradable resin. The branching agent may be included in a content of about 0.1 % by weight to about 1 % by weight in the first biodegradable resin based on the total amount of the first biodegradable resin.

Since the first biodegradable resin includes the branching agent in the range, the biodegradable nonwoven fabric according to the present invention may have appropriate mechanical characteristics and appropriate biodegradability.

The first biodegradable resin may further include polycarbonate diol. The polycarbonate diol may be bonded as a molecular structure to the first biodegradable resin to be incorporated therein.

The polycarbonate diol may be prepared by a dehydration condensation reaction of a carbonate and a polyhydric alcohol. The carbonate may be at least one selected from the group consisting of dimethylcarbonate, diethylcarbonate, dibutyl carbonate, diphenyl carbonate and ethylene carbonate. The polyhydric alcohol may be at least one selected from the group consisting of ethylene glycol, diethylene glycol, neopentyl glycol, 1,6-hexanediol and 1,2-propanediol.

The weight average molecular weight of the polycarbonate diol may be about 500 g/mol to about 5,000 g/mol. The weight average molecular weight of the polycarbonate diol may be about 700 g/mol to about 4,000 g/mol. The weight average molecular weight of the polycarbonate diol may be about 800 to about 3,500 g/mol.

In addition, the viscosity of the polycarbonate diol may be about 300 cps to about 20,000 cps. The viscosity of the polycarbonate diol may be about 400 cps to about 15,000 cps. The viscosity of the polycarbonate diol may be about 500 cps to about 14,000 cps.

The OH value of the polycarbonate diol may be about 20 mgKOH/g to about 350 mgKOH/g. The OH value of the polycarbonate diol may be about 30 mgKOH/g to about 300 mgKOH/g.

The polycarbonate diol may be included in a content of about 0.1 parts by weight to about 5 parts by weight in the first biodegradable resin based on 100 parts by weight of the first biodegradable resin. The polycarbonate diol may be included in a content of about 0.5 parts by weight to about 3 parts by weight in the first biodegradable resin based on 100 parts by weight of the first biodegradable resin. The polycarbonate diol may be included in a content of about 1 part by weight to about 3 parts by weight in the first biodegradable resin based on 100 parts by weight of the first biodegradable resin.

Since the polycarbonate diol has the above-described characteristics, the biodegradable nonwoven fabric according to the present invention may have appropriate wet hardness, appropriate mechanical properties, appropriate solvent resistance, and appropriate biodegradability.

The first biodegradable resin may further include a polyether polyol. The polyether polyol may be bonded as a molecular structure to the first biodegradable resin to be incorporated therein.

The polyether polyol may be prepared by additionally reacting an initiator having two or more active hydrogens (-OH or $NH_2$) with propylene oxide (PO) or ethylene oxide (EO). Examples of the polyether polyol include polypropylene glycol, polyethylene glycol, polytetramethylene ether glycol, and the like.

The weight average molecular weight of the polyether polyol may be about 500 g/mol to about 5,000 g/mol. The weight average molecular weight of the polyether polyol may be about 700 g/mol to about 4,000 g/mol. The weight average molecular weight of the polyether polyol may be about 800 g/mol to about 3,500 g/mol.

In addition, the viscosity of the polyether polyol may be about 300 cps to about 20,000 cps. The viscosity of the polyether polyol may be about 400 cps to about 15,000 cps. The viscosity of the polyether polyol may be about 500 cps to about 14,000 cps.

The polyether polyol may be included in a content of about 0.1 parts by weight to about 5 parts by weight in the first biodegradable resin based on 100 parts by weight of the first biodegradable resin. The polyether polyol may be included in

a content of about 0.5 parts by weight to about 3 parts by weight in the first biodegradable resin based on 100 parts by weight of the first biodegradable resin. The polyether polyol may be included in a content of about 1 part by weight to about 3 parts by weight in the first biodegradable resin based on 100 parts by weight of the first biodegradable resin.

Since the polyether polyol has the above-described characteristics, the biodegradable nonwoven fabric according to the present invention may have appropriate wet hardness, appropriate mechanical properties, appropriate solvent resistance, and appropriate biodegradability.

The biodegradable resin composition may further include a second biodegradable resin.

The second biodegradable resin may include one or more selected from the group consisting of polybutylene succinate, polylactic acid, polybutylene adipate, polybutylene succinate-adipate, polybutylene succinate-terephthalate, polyhydroxybutyrate-valerate, polycaprolactone, and polybutylene succinate adipate terephthalate.

The second biodegradable resin may include polylactic acid.

The polylactic acid may be a high-melting-point polylactic acid having stereo-complex crystals. In addition, the polylactic acid may be formed by solution-mixing or melt-mixing poly L-lactic acid with poly D-lactic acid.

The polylactic acid may include a unit represented by Formula 13 below:

Formula 13

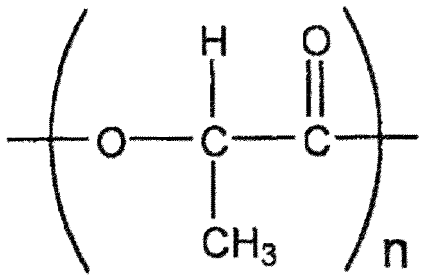

The polylactic acid may be a polymer including an L-lactic acid unit and/or a D-lactic acid unit. The polylactic acid may include poly L-lactic acid and/or poly D-lactic acid.

The poly L-lactic acid may be a polymer including primarily the L-lactic acid unit. The poly L-lactic acid may include the L-lactic acid unit in an amount of approximately 90 mol% to approximately 100 mol%, approximately 95 mol% to approximately 100 mol%, or approximately 97 mol% to approximately 100 mol%. The poly L-lactic acid may include the D-lactic acid unit and/or a unit other than lactic acid. The poly L-lactic acid may include the D-lactic acid unit and/or a unit other than lactic acid in an amount of approximately 0 mol% to approximately 10 mol%, approximately 0 mol% to approximately 5 mol%, or approximately 0 mol% to approximately 3 mol%.

The poly D-lactic acid may be a polymer including primarily the D-lactic acid unit. The poly D-lactic acid may include the D-lactic acid unit in an amount of approximately 90 mol% to approximately 100 mol%, approximately 95 mol% to approximately 100 mol%, or approximately 97 mol% to approximately 100 mol%. The poly D-lactic acid may include the L-lactic acid unit and/or a unit other than lactic acid. The poly D-lactic acid may include the L-lactic acid unit and/or a unit other than lactic acid in an amount of approximately 0 mol% to approximately 10 mol%, approximately 0 mol% to approximately 5 mol%, or approximately 0 mol% to approximately 3 mol%.

The unit other than lactic acid may include units derived from dicarboxylic acids, polyhydric alcohols, hydroxycarboxylic acids, and lactones, which have a functional group capable of forming two or more ester bonds, and units derived from various polyesters, various polyethers, and various polycarbonates, which consist of these various components.

For example, the dicarboxylic acids may include succinic acid, adipic acid, azela phosphoric acid, sebacic acid, terephthalic acid, isophthalic acid, and the like. The polyhydric alcohols may include aliphatic polyhydric alcohols, such as ethylene glycol, propylene glycol, butanediol, pentanediol, hexanediol, octanediol, glycerin, sorbitan, neopentyl glycol, diethylene glycol, triethylene glycol, polyethylene glycol, and polypropylene glycol, and aromatic polyhydric alcohols obtained by adding ethylene oxide to bisphenol.

The hydroxycarboxylic acids may include glycolic acid, hydroxybutyric acid, and the like. For example, the lactones may include glycolide, ε-caprolactone glycolide, ε-caprolactone, β-propiolactone, δ-butyrolactone, β- or γ-butyrolactone, pivalolactone, δ-valerolactone, and the like.

The polylactic acid may be commercially available from Biomer Inc. under the name BIOMER™ L9000. In addition, the polylactic acid may be commercially available from Natureworks LLC (NATUREWORKS®) or Mitsui Chemical (LACEA™). In addition, the polylactic acid may be described in U.S. Patent Nos. 4,797,468; 5,470,944; 5,770,682; 5,821,327; 5,880,254; and 6,326,458, the entirety of which is incorporated in the present invention by reference for all purposes.

The melting point of the polylactic acid may be about 100 °C to about 240 °C. The melting point of the polylactic acid may be about 120 °C to about 220 °C. The melting point of the polylactic acid may be about 140 °C to about 200 °C. The melting point of the polylactic acid may be about 140 °C to about 180 °C.

The crystallization temperature (Tc) of the polylactic acid may be about 50 °C to about 80 °C. The crystallization temperature (Tc) of the polylactic acid may be about 55 °C to about 75 °C.

The glass transition temperature (Tg) of the polylactic acid may be about 20 °C to about 80 °C. The glass transition temperature (Tg) of the polylactic acid may be about 30 °C to about 70 °C. The glass transition temperature (Tg) of the polylactic acid may be about 40 °C to about 65 °C. The melting point and the glass transition temperature may be measured by differential scanning calorimetry (DSC) according to ASTM D-3417.

When the polylactic acid has a melting point and glass transition temperature in the above ranges, extrusion may be facilitated. In addition, when the polylactic acid has a melting point and glass transition temperature in the above ranges, the biodegradable nonwoven fabric according to the present invention may have improved mechanical properties.

The average molecular weight (Mn) of the polylactic acid may be about 20,000 g/mol to about 160,000 g/mol. The average molecular weight (Mn) of the polylactic acid may be about 30,000 g/mol to about 140,000 g/mol. The average molecular weight (Mn) of the polylactic acid may be about 40,000 g/mol to about 120,000 g/mol.

The weight average molecular weight (Mw) of the polylactic acid may be about 40,000 g/mol to about 200,000 g/mol. The weight average molecular weight of the polylactic acid may be about 50,000 g/mol to about 180,000 g/mol. The weight average molecular weight of the polylactic acid may be about 70,000 g/mol to about 160,000 g/mol.

The polydispersity index (Mw/Mn) of the polylactic acid may be about 1.0 to about 3.0. The polydispersity index of the polylactic acid may be about 1.1 to about 2.0. The polydispersity index of the polylactic acid may be about 1.2 to about 1.8. The weight average molecular weight and the number average molecular weight may be measured by methods known to those skilled in the art. For example, the weight average molecular weight and the number average molecular weight may be measured by gel permeation chromatography (GPC). The weight average molecular weight and the number average molecular weight may be measured by standard monodisperse polystyrene.

Since the polylactic acid has a molecular weight and polydispersity index in the above ranges, extrusion may be facilitated. In addition, since the polylactic acid has a molecular weight and polydispersity index in the above ranges, the biodegradable nonwoven fabric according to the present invention may have improved mechanical properties.

The apparent viscosity of the polylactic acid measured at about 190 °C and a shear rate of 1,000/s may be about 50 Pa·s to about 600 Pa·s. The apparent viscosity of the polylactic acid measured at about 190 °C and a shear rate of 1,000/s may be about 100 Pa·s to about 500 Pa·s. The apparent viscosity of the polylactic acid measured at about 190 °C and a shear rate of 1,000/s may be about 200 Pa·s to about 400 Pa·s.

The polylactic acid may have a melt index of about 3 g/10 minutes to about 15 g/10 minutes at about 190 °C. The polylactic acid may have a melt index of about 4 g/10 minutes to about 10 g/10 minutes at about 190 °C. The polylactic acid may have a melt index of about 6 g/10 minutes to about 10 g/10 minutes at about 190 °C.

The polylactic acid may have a melt index of about 10 g/10 minutes to about 30 g/10 minutes at about 220 °C. The polylactic acid may have a melt index of about 12 g/10 minutes to about 25 g/10 minutes at about 220 °C. The polylactic acid may have a melt index of about 15 g/10 minutes to about 25 g/10 minutes at about 220 °C.

The polylactic acid may have a melt index of about 30 g/10 minutes to about 60 g/10 minutes at about 250 °C. The polylactic acid may have a melt index of about 35 g/10 minutes to about 55 g/10 minutes at about 250 °C. The polylactic acid may have a melt index of about 40 g/10 minutes to about 55 g/10 minutes at about 250 °C.

Since the polylactic acid has a viscosity and melt index in the above ranges, extrusion may be facilitated. In addition, since the polylactic acid has a viscosity and melt index in the above ranges, the biodegradable nonwoven fabric according to the present invention may have improved mechanical properties.

Preferably, the biodegradable resin composition may include the polylactic acid-based resin (PLA) and polybutylene adipate terephthalate-based resin (PBAT) described above. In addition, the biodegradable resin composition may further include an inorganic filler and an additive.

The inorganic filler may be at least one selected from the group consisting of calcium sulfate, barium sulfate, talc, talc powder, bentonite, kaolinite, chalk powder, calcium carbonate, graphite, gypsum, electrically conductive carbon black, calcium chloride, iron oxide, aluminum oxide, potassium oxide, dolomite, silicon dioxide, wollastonite, titanium dioxide, silicate, mica, glass fiber, mineral fiber, and the like.

In particle diameter distribution obtained by laser diffraction for the inorganic filler, a cumulative $D_{50}$ may be about 100 $\mu$m or less, about 85 $\mu$m or less, about 70 $\mu$m or less, about 50 $\mu$m or less, about 25 $\mu$m or less, about 10 $\mu$m or less, about 5 $\mu$m or less, about 3 $\mu$m or less or about 1 $\mu$m or less.

In addition, the specific surface area of the inorganic filler may be about 100 $m^2/g$ or more. For example, the specific surface area of the inorganic filler may be about 100 $m^2/g$ or more, about 105 $m^2/g$ or more or about 110 $m^2/g$ or more.

The inorganic filler may be included in an amount of less than about 10 parts by weight, less than about 8 parts by weight, or less than about 6 parts by weight in the biodegradable resin composition based on 100 parts by weight of the

biodegradable resin.

Preferably, the inorganic filler may include titanium dioxide ($TiO_2$). When the biodegradable resin composition is spun, the titanium dioxide may reduce adhesive force between particles of the spun biodegradable resin composition, so that a uniform nano-sized fibrous phase may be formed, and bead formation of a biodegradable nonwoven fabric may be suppressed.

As the titanium dioxide, at least one of $TiO_2$ which is full dull (FD), and $TiO_2$ which is semi dull (SD) may be used. It is desirable not to use strongly dull bright $TiO_2$. Based on the total weight of the biodegradable resin composition, FD $TiO_2$ may be included in a content of 3,000 ppm or more, 5,000 ppm or more, 10,000 ppm or more, 20,000 ppm or more, or 5,000 ppm to 30,000 ppm.

Based on the total weight of the biodegradable resin composition, SD $TiO_2$ may be included in a content of 3,000 ppm or more, 3,500 ppm or more, 4,000 ppm or more, 5,000 ppm or more, or 3,000 ppm to 6,000 ppm.

The additive may include an elongation improver.

As the elongation improver, an oil such as paraffin oil, naphthenic oil, or aromatic oil, or an adipate such as dibutyl adipate, diethylhexyl adipate, dioctyl adipate, or diisopropyl adipate may be used.

The elongation improver may be included in a content of about 10 ppm to about 10,000 ppm based on the total weight of the biodegradable resin composition. The elongation improver may be included in a content of about 100 ppm to about 10,000 ppm based on the total weight of the biodegradable resin composition. When the ranges are satisfied, mechanical properties of a biodegradable molded article may be improved.

The additive may include a metal salt.

The metal salt may be included in a content of about 0.1 ppm to about 1,000 ppm based on the total weight of the biodegradable resin composition. The metal salt may be included in a content of about 1 ppm to about 500 ppm based on the total weight of the biodegradable resin composition. The metal salt may be included in a content of about 1 ppm to about 100 ppm based on the total weight of the biodegradable resin composition. The metal salt may be included in a content of about 1 ppm to about 50 ppm based on the total weight of the biodegradable resin composition. When the ranges are satisfied, the biodegradation rate of a biodegradable nonwoven fabric may be appropriately controlled.

The metal salt may be at least one selected from the group consisting of nitrate, sulfate, hydrochloride, carboxylate, and the like. The metal salt may be at least one selected from the group consisting of sodium salt, calcium salt, potassium salt, magnesium salt, copper salt, iron salt, aluminum salt, silver salt, and the like. The metal salt may be at least one selected from the group consisting of magnesium acetate, calcium acetate, potassium acetate, copper nitrate, silver nitrate, sodium nitrate, and the like.

The additive may include a chain extender.

The chain extender may include isocyanate. The chain extender may be at least one selected from the group consisting of monofunctional isocyanate and polyfunctional isocyanate. The chain extender may be at least one selected from the group consisting of tolylene 2,4-diisocyanate, tolylene 2,6-diisocyanate, diphenylmethane 4,4'-diisocyanate and 2,4'-diisocyanate, naphthalene 1,5-diisocyanate, xylylene diisocyanate, hexamethylene diisocyanate, pentamethylene diisocyanate, isophorone diisocyanate and methylenebis(4-isocyanatocyclohexane). The chain extender may include triisocyanate. The chain extender may include tri(4-isocyanatophenyl)methane.

The chain extender may be chemically bonded to the biodegradable resin. The chain extender may be chemically combined with a polymer contained in the biodegradable resin. The chain extender may be bonded to a terminal of a polymer contained in the biodegradable resin. In addition, the chain extender may be bonded to terminals of three polymers contained in the biodegradable resin.

The chain extender may be included in a content of about 0.1 % by weight to about 10 % by weight in the biodegradable resin composition based on the total amount of the composition. The chain extender may be included in a content of about 1 % by weight to about 8 % by weight in the biodegradable resin composition based on the total amount of the composition. The chain extender may be included in a content of about 2 % by weight to about 7 % by weight in the biodegradable resin composition based on the total amount of the composition. When the ranges are satisfied, a biodegradable nonwoven fabric may have appropriate biodegradability.

The chain extender may react with terminal carboxyl groups or unreacted carboxyl groups contained in the biodegradable resin composition. Accordingly, the biodegradable resin composition may have a low acid value.

In addition, the chain extender may couple polymers contained in the biodegradable resin, thereby increasing the ratio of a high-molecular-weight polymer contained in the biodegradable resin composition. Accordingly, the mechanical properties of a biodegradable nonwoven fabric may be improved.

The additive may include a heat stabilizer. The heat stabilizer may be an antioxidant that has an anti-oxidation function. The heat stabilizer may be a phosphorus heat stabilizer. The heat stabilizer may be an antioxidant having an oxidation prevention function. The heat stabilizer may be a phosphorus-based heat stabilizer. The heat stabilizer may be at least one selected from the group consisting of an amine-based high-temperature heat stabilizer such as tetraethylenepentamine, triethylphosphonoacetate, phosphoric acid, phosphorous acid, polyphosphric acid, trimethyl phosphate (TMP), triethyl phosphate, trimethyl phosphine, triphenyl phosphine and the like.

The content of the heat stabilizer may be 3,000 ppm or less based on the total weight of diol, aromatic dicarboxylic acid, and aliphatic dicarboxylic acid. Specifically, the content of the heat stabilizer may be 10 ppm to 3,000 ppm, 20 ppm to 2,000 ppm, 20 ppm to 1,500 ppm or 20 ppm to 1,000 ppm based on the total weight of diol, aromatic dicarboxylic acid, and aliphatic dicarboxylic acid. When the content of the heat stabilizer satisfies the ranges, the deterioration of the polymer due to high temperature during the reaction process may be controlled, so the terminal groups of the polymer may be reduced, and the color may be improved.

The additive may include a UV stabilizer.

The UV stabilizer may be a hindered amine-based UV stabilizer. The UV stabilizer may include SUNOVIN 904 manufactured by SUNSHOW Company. The UV stabilizer may have a high molecular weight. The UV stabilizer may have a weight average molecular weight of about 1,800 g/mol to about 5,000 g/mol. The UV stabilizer may have an weight average molecular weight of about 2,000 g/mol to about 4,000 g/mol.

The melting point of the UV stabilizer may be about 100°C to about 200°C. The melting point of the UV stabilizer may be about 110°C to about 150°C.

When thermogravimetric analysis is performed at up to about 424°C, the volatilization amount of the UV stabilizer may be about 1 wt% or less. In addition, when thermogravimetric analysis is performed at up to about 424°C, the carbonization amount of the UV stabilizer may be about 0.1 wt% or less.

The biodegradable resin composition according to an embodiment may include the UV stabilizer in a content of about 0.01 parts by weight to about 5 parts by weight based on 100 parts by weight of the biodegradable resin. The biodegradable resin composition according to an embodiment may include the UV stabilizer in a content of about 0.05 parts by weight to about 1 part by weight based on 100 parts by weight of the biodegradable resin. The biodegradable resin composition according to an embodiment may include the UV stabilizer in a content of about 0.1 parts by weight to about 0.5 parts by weight based on 100 parts by weight of the biodegradable resin.

Since the UV stabilizer has the above-described characteristics, it may be uniformly dispersed in the biodegradable resin composition according to an embodiment.

Since the UV stabilizer has the above-described characteristics, the mechanical properties of the biodegradable resin composition according to an embodiment may be improved

Since the UV stabilizer has the above-described characteristics, the biodegradable resin composition according to an embodiment may have appropriate UV resistance.

Since the UV stabilizer has the above-described characteristics, the biodegradable resin composition according to an embodiment may have an appropriate biodegradation rate.

The biodegradable resin composition may include an applier. The applier may be an electrostatic applier. The applier may improve the electrical conductivity of the biodegradable resin solution containing the biodegradable resin composition, and may suppress the formation of beads in a biodegradable nonwoven fabric produced from the biodegradable resin solution. In addition, since the biodegradable resin composition includes the applier, a nonwoven fabric may be produced from the biodegradable resin composition by an electrospinning manufacturing method.

The type of the applier is not particularly limited. In an embodiment, the applier may be at least one of potassium acetate ($CH_3COOK$) and magnesium acetate ($Mg(CH_3COO)$).

Based on the total weight of the biodegradable resin composition, the content of the applier may be 1 ppm to 500 ppm, 1 ppm to 400 ppm, 5 ppm to 400 ppm, 5 ppm to 300 ppm, 7 ppm to 300 ppm, 7 ppm to 200 ppm, 7 ppm to 150 ppm, 9 ppm to 150 ppm, 10 ppm to 150 ppm, or 10 ppm to 100 ppm. When the above range is satisfied, a yarn having a nano-sized diameter may be produced from the biodegradable resin solution by an electrospinning manufacturing method. In addition, yarns may be continuously manufactured even at a low applied voltage using an electrospinning manufacturing process.

The biodegradable resin composition may include a reinforcing material.

The reinforcing material may improve the mechanical properties of the biodegradable resin composition and a biodegradable nonwoven fabric made therefrom. In addition, the reinforcing material may control the deformation characteristics of a biodegradable nonwoven fabric due to ultraviolet rays. In addition, the reinforcing material may control the biodegradability of a biodegradable nonwoven fabric.

The reinforcing material may be a fiber derived from biomass. The reinforcing material may be a fiber made of an organic material. The reinforcing material may be nanocellulose.

The nanocellulose may be one or more selected from the group consisting of nanocrystalline cellulose, cellulose nanofiber, microfibrillated cellulose, hydroxymethyl cellulose, hydroxyethyl cellulose, hydroxypropyl cellulose, hydroxypropylmethyl cellulose, cellulose acetate, methyl cellulose, ethyl cellulose, propyl cellulose, butyl cellulose, pentyl cellulose, hexyl cellulose and cyclohexyl cellulose.

The nanocellulose may include an ion-bonded metal. The nanocrystalline cellulose may include elemental sodium, carboxylate sodium salt, etc. In addition, the nanocrystalline cellulose may include sulphate. The nanocrystalline cellulose may include a cellulose hydrogen sulphate sodium salt.

The nanocellulose may be represented by Formula 14 below:

Formula 14 $[(C_6O_5H_{10})_x\ SO_3Na]_y$

where x is 15 to 35, y is 1 to 10.

The nanocellulose may have a specific surface area of about 200 $m^2$/g to about 600 $m^2$/g. The nanocellulose may have a specific surface area of about 300 $m^2$/g to about 500 $m^2$/g.

The weight average molecular weight of the nanocellulose may be about 10,000 g/mol to about 40,000 g/mol. The weight average molecular weight of the nanocrystalline cellulose may be about 11,000 g/mol to about 35,000 g/mol.

The moisture content of the nanocrystalline cellulose may be about 2 % by weight to about 8 % by weight. The moisture content of the nanocrystalline cellulose may be about 4 % by weight to about 6 % by weight.

The nanocellulose may have an average diameter of about 0.5 nm to about 10 nm. The nanocellulose may have an average diameter of about 1 nm to about 8 nm. The nanocellulose may have an average diameter of about 1.5 nm to about 7 nm.

The average length of the nanocellulose may be about 20 nm to about 200 nm. The average length of the nanocellulose may be about 30 nm to about 180 nm. The average length of the nanocellulose may be about 35 nm to about 150 nm. When the diameter and length of the nanocellulose satisfy the ranges, the properties of a biodegradable resin composition and a biodegradable nonwoven fabric obtained using the same may be further improved.

The diameter and length of the nanocellulose may be measured by atomic force microscopy in a state of being dispersed in water.

The content of sulfate salt in the nanocellulose may be about 0.6 % by weight to about 1.2 % by weight based on the entire nanocrystalline cellulose. The content of sulfate salt in the nanocrystalline cellulose may be about 0.75 % by weight to about 1.1 % by weight based on the entire nanocellulose.

The pH of the nanocellulose may be 5 to 7. The pH of the nanocellulose may be 6 to 7.

The zeta potential of the nanocellulose may be about -25 mV to about -50 mV. The zeta potential of the nanocellulose may be about -30 mV to about -45 mV.

The nanocellulose may be included in a content of about 0.1 parts by weight to about 2 parts by weight based on 100 parts by weight of the biodegradable resin composition. The nanocellulose may be included in a content of about 0.3 parts by weight to about 1.5 parts by weight based on 100 parts by weight of the biodegradable resin composition. The nanocellulose may be included in a content of about 0.5 parts by weight to about 1.2 parts by weight based on 100 parts by weight of the biodegradable resin composition. The nanocellulose may be included in a content of about 0.6 parts by weight to about 1 part by weight based on 100 parts by weight of the biodegradable resin composition.

Since the nanocellulose has the above-mentioned characteristics, it may be uniformly dispersed in the biodegradable resin composition.

Since the nanocellulose has the above-mentioned characteristics, the mechanical properties of a biodegradable nonwoven fabric made from the biodegradable resin composition may be improved.

Since the nanocellulose has the above-mentioned characteristics, a biodegradable nonwoven fabric made from the biodegradable resin composition may have appropriate UV resistance.

Since the nanocellulose has the above-mentioned characteristics, a biodegradable nonwoven fabric made from the biodegradable resin composition may have an appropriate biodegradation rate.

The biodegradable resin composition may include an oligomer.

The average molecular weight of the oligomer may be about 400 g/mol to about 1,300 g/mol. Based on the total weight of the biodegradable resin composition, the oligomer may be included in a content of about 3,000 ppm to about 30,000 ppm. Based on the total weight of the biodegradable resin composition, the oligomer may be included in a content of about 5,000 ppm to about 20,000 ppm. Based on the total weight of the biodegradable resin composition, the oligomer may be included in a content of about 5,000 ppm to about 15,000 ppm. Based on the total weight of the biodegradable resin composition, the oligomer may be included in a content of about 7,000 ppm to about 15,000 ppm.

The oligomer may be a reaction product of at least two or more of the diol, the aromatic dicarboxylic acid and the aliphatic dicarboxylic acid. The oligomer may be a reaction product of 1,4-butanediol, terephthalic acid and adipic acid.

The oligomer may include an oligomer in which a molar ratio of the aliphatic dicarboxylic acid is higher than that of the aromatic dicarboxylic acid. In the oligomer, a ratio of an oligomer containing a relatively large amount of the aliphatic dicarboxylic acid may be higher than a ratio of an oligomer containing a relatively large amount of the aromatic dicarboxylic acid.

In addition, the oligomer may appropriately control the biodegradability of the biodegradable resin composition. The oligomer may be a biodegradation regulator for appropriately controlling the biodegradability of the biodegradable resin composition.

The biodegradable resin composition may include a plasticizer.

The plasticizer may impart processability or flexibility to a biodegradable nonwoven fabric to be manufactured. The plasticizer may be glycerol, acrylate, glycerin, glycerol monostearate (GMS), sorbitol or a mixture thereof. The content of the plasticizer may be less than 2.0 % by weight, 1.8 % by weight or less, 1.6 % by weight or less, 1.4 % by weight or less,

1.2 % by weight or less, or 1.0 % by weight or less based on the total weight of the biodegradable resin composition. When the ranges are satisfied, a biodegradable nonwoven fabric made from the biodegradable resin composition may be imparted with flexibility, and a certain degree of water resistance may be maintained within a user's normal usage period.

The biodegradable resin composition may include a heterogeneous biodegradable resin other than the first biodegradable resin and the second biodegradable resin.

The heterogeneous biodegradable resin may be at least one selected from the group consisting of polybutylene azelate terephthalate (PBAzT), polyhydroxybutyrate (PHB), polybutylene succinate (PBS), polybutylene sebacate terephthalate (PBSeT), polybutylene succinate terephthalate (PBST), and polyhydroxyalkanoate (PHA).

The heterogeneous biodegradable resin may be included in a content of about 10 parts by weight to about 100 parts by weight based on 100 parts by weight of the biodegradable resin. The heterogeneous biodegradable resin may be included in a content of about 10 parts by weight to about 60 parts by weight based on 100 parts by weight of the biodegradable resin. The heterogeneous biodegradable resin may be included in a content of about 20 parts by weight to about 50 parts by weight based on 100 parts by weight of the biodegradable resin. When the ranges are satisfied, the mechanical, optical, and chemical properties of the biodegradable resin may be complemented, so that a biodegradable nonwoven fabric made from the biodegradable resin composition may have appropriate UV resistance and an appropriate biodegradation rate.

The number of carboxyl terminal groups of the biodegradable resin composition may be about 50 eq/ton or less. For example, the number of carboxyl terminal groups of the biodegradable resin composition may be about 50 eq/ton or less, about 48 eq/ton or less, about 45 eq/ton or less or about 42 eq/ton or less. By adjusting the number of carboxyl terminal groups within the range, deterioration may be prevented and improved mechanical properties may be implemented when the biodegradable resin composition is extruded and formed into a biodegradable nonwoven fabric.

The intrinsic viscosity (IV) of the biodegradable resin composition may be about 0.9 dl/g or more. The intrinsic viscosity of the biodegradable resin composition may be about 0.95 dl/g or more, about 1.0 dl/g or more, about 1.1 dl/g or more, about 1.2 dl/g or more or about 1.3 dl/g or more. The intrinsic viscosity of the biodegradable resin composition may be about 0.95 dl/g to about 1.7 dl/g. The intrinsic viscosity of the biodegradable resin composition may be about 1.3 dl/g to about 1.7 dl/g. The intrinsic viscosity of the biodegradable resin composition may be about 1.4 dl/g to about 1.7 dl/g. When the intrinsic viscosity is adjusted within the range, the biodegradable resin composition may be smoothly injected, thereby improving the manufacturing process efficiency of the biodegradable nonwoven fabric.

The maximum load of the biodegradable resin composition may be 2 kgf to 5 kgf, 2.5 kgf to 5 kgf, 3 kgf to 5 kgf, or 4 kgf to 4.8 kgf.

The yield strength of the biodegradable resin composition may be 0.5 Mpa to 8 Mpa, 0.5 Mpa to 7 Mpa, 1 Mpa to 7 Mpa, 1.2 Mpa to 7 Mpa, or 1.2 Mpa to 5.4 Mpa.

The elongation of the biodegradable resin composition may be 300 % to 700 %, 350 % to 700 %, 400 % to 700 %, 450 % to 700 %, or 500 % to 700 %.

The maximum load, yield strength, and elongation of the biodegradable resin composition may be indicators of the adhesiveness of the biodegradable resin composition. The maximum load, yield strength, and elongation of the biodegradable resin composition may vary depending upon a content range of titanium dioxide contained in the biodegradable resin composition. When the ranges are satisfied, adhesive force between particles of the spun biodegradable resin composition may be reduced, so that a uniform nano-sized fibrous phase may be formed, and bead formation of a biodegradable nonwoven fabric may be suppressed.

The maximum load, yield strength, and elongation of the biodegradable resin composition may be measured according to the following methods.

After overlapping two specimens with a thickness of 300 $\mu$m made from the biodegradable resin composition, a load of about 3.7 kg is applied thereto, and they are bonded by pressing at 130 °C for 30 minutes, followed by measurement at a tensile speed of 100 mm/min.

The electrical resistance of the biodegradable resin composition in a molten state may be measured.

To measure the electrical resistance, the biodegradable resin composition is melted at about 240°C under a nitrogen atmosphere, and then a bubble removal process is performed, and a platinum electrode may be inserted into the molten biodegradable resin composition. Next, measurement may be performed under molten state conditions at about 50 V for about 120 sec. Specifically, the electrical resistance in the molten state may be calculated according to Equation 10 below:

Equation 10:

$$\text{Electrical resistance (M}\Omega\text{) in molten state} = A/L \times V/I$$

In Equation 10, A is the area (cm$^2$) of electrodes, L is a distance (cm) between the electrodes, I is an applied

current(ampere), and V is an applied voltage (V).

The electrical resistance of the biodegradable resin composition in a molten state may be 1 MΩ to 15 MΩ, 1 MΩ to 14 MΩ, 1 MΩ to 13 MΩ, 1 MΩ to 12 MΩ, 1 MΩ to 11 MΩ, 1 MΩ to 10 MΩ, 2 MΩ to 10 MΩ, or 3 MΩ to 10 MΩ. When this range is satisfied, electrostatic applicability is improved, thereby efficiently producing a yarn having a nano-sized diameter. In addition, a biodegradable nonwoven fabric containing the yarn is lightweight and has a high surface area and porosity, so it may also be applied to products requiring moisture absorption.

More specifically, FIG. 1 schematically illustrates an apparatus for manufacturing a biodegradable resin composition according to an embodiment. Referring to FIG. 1, the apparatus may include a slurry agitator 100, an esterification reaction part 200, a polycondensation reaction part 300, a post-treatment part 400, a first recovery part 510, and a second recovery part 520.

The operation of preparing the biodegradable resin composition may include an operation of preparing a slurry including the diol and the aromatic dicarboxylic acid.

The operation may include an operation of mixing and treating the diol and the aromatic dicarboxylic acid. That is, the operation may be a pretreatment operation before an esterification reaction and an operation of mixing and slurrying the diol and the aromatic dicarboxylic acid. Here, the diol may include a biomass-based diol component.

The diol and the aromatic dicarboxylic acid may be fed into and stirred in the slurry agitator 100 to produce the slurry.

By mixing and pretreating the diol and the aromatic dicarboxylic acid to form a slurry, the diol and the aromatic dicarboxylic acid may be uniformly reacted. The mixing and pretreating of the diol and the aromatic dicarboxylic acid is also effective in speeding up the esterification reaction, thereby increasing the reaction efficiency.

In particular, when an aromatic dicarboxylic acid, such as terephthalic acid, has complete crystallinity and is in powder form, its solubility in the diol is very low, making it difficult for a homogeneous reaction to occur. Therefore, the pretreatment process of forming the slurry plays an important role in implementing the excellent physical properties of the biodegradable nonwoven fabric according to the present invention.

When the aromatic dicarboxylic acid is terephthalic acid, the terephthalic acid has perfect crystallinity and is a white crystal that sublimates around 300°C at normal pressure without a melting point, so its solubility in the diol is very low, making it difficult for a homogeneous reaction to occur.

When the aromatic dicarboxylic acid is terephthalic acid, the terephthalic acid has perfect crystallinity and is a white crystal that sublimates around 300°C at normal pressure without a melting point, so its solubility in the diol is very low, making it difficult for a homogeneous reaction to occur. Accordingly, when a pretreatment process is performed before an esterification, a uniform reaction may be induced by increasing the surface area for reacting with a diol in a solid matrix of terephthalic acid.

In addition, when the aromatic dicarboxylic acid is dimethyl terephthalic acid, the dimethyl terephthalic acid may be made into a molten state at about 142°C to 170°C by the pretreatment process and reacted with the diol, so that an esterification can be proceeded faster and more efficiently.

In the pretreatment operation of preparing the slurry, the structure and properties of the biodegradable resin composition may vary depending upon the particle size, particle size distribution, pretreatment reaction conditions, etc. of the aromatic dicarboxylic acid.

For example, the aromatic dicarboxylic acid may include terephthalic acid. In particle size distribution (PSD), the terephthalic acid may have an average particle diameter (D50) of 10 $\mu$m to 400 $\mu$m, measured by a particle size analyzer Microtrac S3500, and may have a standard deviation of 100 or less for the average particle diameter (D50). The standard deviation means the square root of the variance. The average particle diameter (D50) of the terephthalic acid may be 20 $\mu$m to 200 $\mu$m, 30 $\mu$m to 180 $\mu$m, or 50 $\mu$m to 150 $\mu$m. When the average particle diameter (D50) of the terephthalic acid satisfies the ranges, it may be more advantageous in terms of improved solubility in diol and a reaction rate.

In the pretreatment process, the diol and the aromatic dicarboxylic acid may be mixed and fed into the slurry agitator (tank) 100.

For example, the slurry agitator 100 may have an anchor-type bottom and a height of 20 mm or more to an agitator. In addition, the slurry agitator 100 may be equipped with 2 or more rotating blades, which may be more advantageous in achieving an efficient stirring effect.

For example, a height to the slurry agitator 100 may be 20 mm or more, i.e., the supply line and the bottom of the agitator may be almost attached to each other. In this case, a slurry may be obtained without precipitation. If the shape, form, and rotating blades of the agitator do not meet the above conditions, the aromatic dicarboxylic acid may sediment to the bottom when diol and aromatic dicarboxylic acid are initially mixed. In this case, phase separation may occur.

The pretreatment process of preparing the slurry may include an operation of mixing the diol and the aromatic dicarboxylic acid and agitating at about 30°C to about 100°C at about 50 rpm to about 200 for 10 minutes or more, or 10 minutes to 200 minutes.

The diol may have the above-described characteristics.

The diol may be added all at once or in divided doses. For example, the diol may be added separately when mixed

with aromatic dicarboxylic acid and when mixed with aliphatic dicarboxylic acid.

The aromatic dicarboxylic acid may have the above-described characteristics.

In the pretreatment operation of preparing the slurry, a molar ratio of the diol to the aromatic dicarboxylic acid may be about 0.8:1 to about 1.2:1. In the pretreatment operation of preparing the slurry, a molar ratio of the diol to the aromatic dicarboxylic acid may be about 0.9:1 to about 1.1:1.

When the diol is added in a larger amount than the aromatic dicarboxylic acid, the aromatic dicarboxylic acid may be easily dispersed.

In addition, an additive may be added to the slurry. At least one of the nanocellulose and the metal salt may be added to the slurry.

The operation of preparing the biodegradable resin may include an operation of esterifying the slurry and the aliphatic dicarboxylic acid to prepare a prepolymer.

The slurry and the aliphatic dicarboxylic acid may be reacted in the esterification reaction part 200.

In the esterification, the reaction time may be shortened by using the slurry. For example, a slurry obtained from the pretreatment operation may shorten the reaction time of the esterification by 1.5 times or more.

The esterification may be performed at least twice. A prepolymer to be added to a condensation polymerization process may be formed by the esterification.

For example, the esterification may be performed at once after adding an aliphatic dicarboxylic acid, or a diol and an aliphatic dicarboxylic acid to the slurry. That is, the esterification may proceed when the slurry is fed into the esterification reactor and the aliphatic dicarboxylic acid alone or the aliphatic dicarboxylic acid and the diol are fed into the esterification reactor.

The esterification may be performed at about 250°C or less for about 0.5 hours to about 5 hours. Specifically, the esterification may be performed at about 180°C to about 250°C, about 185°C to about 240°C or about 200°C to about 240°C under normal pressure or reduced pressure until the theoretical amount of water as a by-product reaches 95%. For example, the esterification may be performed for 0.5 hours to 5.5 hours, 0.5 hours to 4.5 hours or 1 hour to 4 hours, but the present invention is not limited thereto.

For example, the slurry may be mixed with at least one of the polycarbonate diol and the polyether polyol to perform a first esterification reaction. Alternatively, the polycarbonate diol and the polyether polyol may be introduced into second esterification.

After the first esterification, a mixture of the aliphatic dicarboxylic acid and the diol may be fed into the esterification reaction part 200, and second esterification may be performed with the first esterification product. At least one of the polycarbonate diol and the polyether polyol may be added to the second esterification.

The first esterification reaction may be performed at 250 °C or lower for 1.25 hours to 4 hours. For example, the first esterification reaction may be carried out under normal or reduced pressure until water as a by-product theoretically reaches 95% at 180 °C to 250 °C, 185 °C to 240 °C, or 200 °C to 240 °C. For example, the first esterification reaction may be performed for 1.25 hours to 4 hours, 1.25 hours to 3.5 hours, or 2.5 hours to 3 hours, but the present invention is not limited thereto.

The second esterification reaction may be performed at about 250 °C or lower for 0.25 hours to 3.5 hours. For example, the second esterification reaction may be carried out under normal or reduced pressure until water as a by-product theoretically reaches 95% at 180 °C to 250 °C, 185 °C to 240 °C, or 200 °C to 240 °C. For example, the second esterification reaction may be performed for 0.5 hours to 3 hours, 1 hour to 2.5 hours or 1.5 hours to 2.5 hours, but the present invention is not limited thereto.

In the first and second esterifications, the number ratio, etc. of the first block and the second block may be controlled by adjusting the reaction temperature, the reaction time, and the contents of diol, aromatic dicarboxylic acid, and aliphatic dicarboxylic acid added, respectively. In addition, when the esterification is divided into the first esterification and the second esterification, the overall esterification may be precisely controlled. Accordingly, when the esterification is divisionally performed, the reaction stability and reaction uniformity of the esterification may be improved.

In addition, in the second esterification, the branching agent may be additionally added. That is, the prepolymer may be formed by reacting the mixture of the aliphatic dicarboxylic acid and the diol, the branching agent and the first esterification product. The characteristics and content of the branching agent may be the same as described above.

By the esterification reaction, a prepolymer may be formed.

The number average molecular weight of the prepolymer may be about 500 g/mol to about 10,000 g/mol. For example, the number average molecular weight of the prepolymer may be about 500 g/mol to about 8,500 g/mol, about 500 g/mol to about 8,000 g/mol, about 500 g/mol to about 7,000 g/mol, about 500 g/mol to about 5,000 g/mol, or about 800 g/mol to about 3,000 g/mol. When the number average molecular weight of the prepolymer satisfies the ranges, the molecular weight of the polymer may be efficiently increased in the condensation polymerization reaction.

The number average molecular weight may be measured using gel permeation chromatography (GPC). Specifically, data produced by gel permeation chromatography includes several items such as Mn, Mw, and Mp, but the molecular weight may be measured based on the number average molecular weight (Mn).

The reinforcing material, the branching agent, the polycarbonate diol, the polyether polyol, the metal salt, or the like may be added together with the slurry before the esterification. The reinforcing material, the branching agent, the polycarbonate diol, the polyether polyol, the metal salt, or the like may be fed into the esterification part 200 in the middle of the esterification. The reinforcing material, the branching agent, the polycarbonate diol, the polyether polyol, the metal salt, or the like may be added to the esterification product after the esterification. The reinforcing material, the branching agent, the polycarbonate diol, the polyether polyol, the metal salt, or the like may be added together with the aliphatic dicarboxylic acid. The reinforcing material, the branching agent, the polycarbonate diol, the polyether polyol, the metal salt, or the like may be fed into the esterification part 200 after the first esterification and before the second esterification.

Since the reinforcing material and the metal salt are fed into the esterification reaction, the reinforcing material and the metal salt may be uniformly dispersed in the biodegradable resin.

The reinforcing material may have the above-described characteristics. In particular, the nanocellulose may be used as the reinforcing material.

The nanocellulose may be pretreated by a bead mill or ultrasonic waves before being added. Specifically, the nanocellulose may be water-dispersed nanocellulose pretreated with a bead mill or pretreated with ultrasonic waves.

The bead mill pretreatment may be performed with a vertical mill or horizontal mill as a wet milling device. The horizontal mill is preferable in that the amount of beads that can be filled into a chamber is larger, and the uneven wear of the machine is reduced, the wear of the beads is reduced, and maintenance is easier, but the present invention is not limited thereto.

The bead mill pretreatment may be performed using one or more bead types selected from the group consisting of zirconium, zircon, zirconia, quartz and aluminum oxide.

Specifically, the bead mill pretreatment may be performed using beads having a diameter of about 0.3 mm to about 1 mm. For example, the diameter of the beads may be about 0.3 mm to about 0.9 mm, about 0.4 mm to about 0.8 mm, about 0.45 mm to about 0.7 mm or about 0.45 mm to about 0.6 mm.

When the diameter of the beads satisfies the range, the dispersibility of nanocellulose may be further improved. When the diameter of the beads exceeds the range, the average particle diameter and average particle deviation of nanocellulose increase, resulting in low dispersibility.

In addition, in the bead mill pretreatment, it is preferable to use beads with a higher specific gravity than that of nanocellulose in that sufficient energy can be delivered. For example, the beads may be one or more selected from the group consisting of zirconium, zircon, zirconia, quartz and aluminum oxide which have a higher specific gravity than water-dispersed nanocellulose, and zirconium beads having a specific gravity four times or higher than the water-dispersed nanocellulose are preferred, without being limited thereto.

In addition, the ultrasonic pretreatment is a method of physically closing or pulverizing nanoparticles with waves generated by emitting 20 kHz ultrasound into a solution.

The ultrasonic pretreatment may be performed for less than 30 minutes at an output of 30,000 J/s or less. For example, the ultrasonic pretreatment may be performed at an output of 25,000 J/s or less or 22,000 J/s or less for 25 minutes or less, 20 minutes or less or 18 minutes or less. When the output and the execution time satisfy the above ranges, the effect, i.e., the improvement of dispersibility, of the ultrasonic pretreatment may be maximized. When the output exceeds the above range, the nanoparticles may rather re-agglomerate and the dispersibility may be lowered.

The nanocellulose may be pre-treated with a bead mill or pre-treated with ultrasonic waves. Alternatively, the nanocellulose may be pre-treated with a bead mill and pre-treated with ultrasonic waves. Here, it is preferred to perform ultrasonic pretreatment after pre-treating with a bead mill in terms of improving dispersibility by preventing re-agglomeration.

Since the nanocellulose includes an ion-bonded metal, its dispersibility in water may be very high. In addition, by the bead mill pretreatment and the ultrasonic pretreatment, an aqueous dispersion with a very high degree of dispersion of the nanocellulose may be obtained. The content of the nanocellulose in the nanocellulose aqueous dispersion may be about 1 % by weight to about 50 % by weight.

In the esterification reaction, a titanium-based catalyst and/or a germanium-based catalyst may be used. Specifically, the titanium-based catalyst and/or the germanium-based catalyst may be added to the slurry, and the esterification reaction may proceed.

In addition, before the first esterification reaction, the titanium-based catalyst and/or the germanium-based catalyst may be added to the slurry, and the titanium-based catalyst and/or the germanium-based catalyst may be further added to the product of the first esterification reaction.

The biodegradable resin may include one or more titanium-based catalysts selected from the group consisting of titanium isopropoxide, antimony trioxide, dibutyltin oxide, tetrapropyl titanate, tetrabutyl titanate, tetraisopropyl titanate, antimonia acetate, calcium acetate and magnesium acetate, or one or more germanium-based catalysts selected from the group consisting of germanium oxide, germanium methoxide, germanium ethoxide, tetramethyl germanium, tetraethyl germanium and germanium sulfide.

In addition, the content of the catalyst may be about 100 ppm to 2,000 ppm based on the total weight of diol,

aromatic dicarboxylic acid, and aliphatic dicarboxylic acid. For example, a titanium-based catalyst or a germanium-based catalyst may be included in a content of about 100 ppm to about 1,600 ppm, about 150 ppm to about 1,400 ppm, about 200 ppm to about 1,200 ppm or about 250 ppm to about 1,100 ppm. When the content of the catalyst satisfies the range, the properties may be further improved.

In addition, the heat stabilizer may be added together with the slurry before the esterification. The heat stabilizer may be fed into the esterification part 200 in the middle of the esterification. The heat stabilizer may be added to the esterification product after the esterification. In addition, the heat stabilizer may be added together with the aliphatic dicarboxylic acid. In addition, the heat stabilizer may be fed into the esterification part 200 after the first esterification and before the second esterification.

The characteristics of the heat stabilizer may be as described above.

The content of the heat stabilizer may be 3,000 ppm or less based on the total weight of diol, aromatic dicarboxylic acid, and aliphatic dicarboxylic acid. Specifically, the content of the heat stabilizer may be 10 ppm to 3,000 ppm, 20 ppm to 2,000 ppm, 20 ppm to 1,500 ppm or 20 ppm to 1,000 ppm based on the total weight of diol, aromatic dicarboxylic acid, and aliphatic dicarboxylic acid. When the content of the heat stabilizer satisfies the ranges, the deterioration of the polymer due to high temperature during the reaction process may be controlled, so the terminal groups of the polymer may be reduced and the color may be improved.

After completion of the esterification, one or more selected from the group consisting of an additive such as silica, potassium or magnesium and a color-correcting agent such as cobalt acetate may be further added to the esterification product. That is, after completion of the esterification, the additive and/or the color-correcting agent may be added and stabilized, and then a polycondensation reaction may be performed. The additive and/or the color-correcting agent may be added after completion of the esterification reaction and may be fed into the polycondensation reaction part 300 together with the prepolymer. Accordingly, the additive and/or the color-correcting agent may be uniformly dispersed in the biodegradable resin.

After completion of the esterification reaction, the inorganic filler may be added to the esterification reaction product. That is, after completion of the esterification reaction, the polycondensation reaction may proceed after the inorganic filler is added and stabilized. The characteristics of the inorganic filler are as described above. The inorganic filler may be fed into the polycondensation reaction part 300 together with the prepolymer, and the condensation-polymerization process may proceed. Accordingly, the inorganic filler may be uniformly dispersed in the biodegradable resin.

In addition, the first recovery part 510 may recover by-products such as water from the esterification reaction part 200. The first recovery part 510 may recover by-products generated from the esterification by applying vacuum pressure to the esterification reaction part 200 or proceeding with reflux.

The operation of preparing the biodegradable resin may include an operation of performing a polycondensation reaction of the prepolymer. The operation of performing the polycondensation reaction may be performed as follows.

The prepolymer may be fed into the polycondensation reaction part 300. In addition, at least one of the reinforcing material, the heat stabilizer, the color-correcting agent, the inorganic filler, the metal salt and other additives may be fed into the polycondensation reaction part 300 together with the prepolymer.

Next, the polycondensation reaction may be performed at about 180°C to about 280°C and about 10 torrs or less for about 1 hour to about 5 hours. For example, the polycondensation reaction may be performed at about 190°C to about 270°C, about 210°C to about 260°C or about 230°C to about 255°C under about 0.9 torrs or less, about 0.7 torrs or less, about 0.2 torrs to about 10 torrs, about 0.3 torrs to about 0.9 torrs or about 0.2 torrs to about 0.6 torrs for about 1.5 hours to about 5 hours, about 2 hours to about 4.5 hours or about 2 hours to about 4 hours.

The polycondensation reaction may include first polycondensation and second polycondensation.

For example, the first polycondensation may be performed at about 260°C or less, about 250°C or less, about 215°C to about 250°C, about 215°C to about 245°C or about 230°C to about 245°C under about 1 torr to about 200 torr, about 2 torrs to about 100 torr, about 4 torrs to about 50 torr, about 5 torrs to about 45 torrs or about 8 torrs to about 32 torrs for about 0.5 hours to about 3.5 hours, about 0.5 hours to about 3.0 hours or about 0.5 hours to about 2.8 hours.

In addition, the second polycondensation may be performed at about 220°C to about 265°C, about 230°C to about 260°C or about 235°C to about 255°C under about 1 torr or less, about 0.8 torrs or less, about 0.6 torrs or less, about 0.1 torrs to about 1 torr, about 0.2 torrs to about 0.8 torrs or about 0.2 torrs to about 0.6 torrs for about 0.5 hours to about 4 hours, about 1 hour to about 3.5 hours or about 1.5 hours to about 3.5 hours.

In addition, before the polycondensation reaction, a titanium-based catalyst or a germanium-based catalyst may be further added to the prepolymer. In addition, before the polycondensation reaction, one or more selected from the group consisting of an additive such as silica, potassium or magnesium; an amine-based stabilizer such as trimethyl phosphate, triphenyl phosphate, trimethyl phosphine, phosphoric acid, phosphorous acid, or tetraethylenepentamine; and a polymerization catalyst such as antimony trioxide, antimony trioxide or tetrabutyl titanate may be further added to the prepolymer.

The number average molecular weight of the polymer may be about 40,000 g/mol or more. For example, the number average molecular weight of the polymer may be about 43,000 g/mol or more, about 45,000 g/mol or more, or

about 50,000 g/mol to about 70,000 g/mol. When the number average molecular weight of the polymer satisfies the range, physical properties, impact resistance, durability and formability may be further improved.

In addition, the second recovery part 520 may recover by-products such as water from the polycondensation reaction part 300. The second recovery part 520 may apply vacuum pressure to the polycondensation reaction part 300, and may recover by-products generated in the polycondensation reaction.

The second recovery part 520 may apply a vacuum pressure of about 0.1 torrs to about 1 torr to the inside of the polycondensation reaction part 300. The second recovery part 520 may apply a vacuum pressure of about 0.1 torrs to about 0.9 torrs to the inside of the polycondensation reaction part 300.

Next, the applier may be added to the polymer. In addition, the anti-hydrolysis agent and/or the chain extender may be added to the polymer. Next, the polymer and the applier may be uniformly mixed, and maintained at about 200 °C to about 260 °C for about 1 minute to about 15 minutes. In addition, the polymer, the anti-hydrolysis agent and the chain extender may be uniformly mixed, and maintained at about 200 °C to about 260 °C for about 1 minute to about 15 minutes. Accordingly, the polymer may react with the applier. The polymer may react with the anti-hydrolysis agent and/or the chain extender.

The characteristics of the applier and the chain extender are the same as described above.

The operation of preparing the biodegradable resin may include an operation of manufacturing a pellet from the polymer.

Specifically, the polymer may be cooled at about 15 °C or lower, about 10 °C or lower, or about 6 °C or lower, and then the cooled polymer may be cut to produce pellets.

The cutting operation may be performed using any pellet cutting machine used in the art without limitation, and the pellet may have various shapes. As the pellet cutting method, an underwater cutting method or a strand cutting method may be used.

The pellet may be subjected to an additional post-treatment process. The pellet may be fed into the post-treatment part 400, and the post-treatment process may be performed.

The post-treatment process may be performed in the post-treatment part 400. The pellet may be fed into the post-treatment part 400. Next, the post-treatment part 400 may melt and re-extrude the fed pellet by frictional heat. That is, the post-treatment part 400 may include an extruder such as a twin-screw extruder.

The temperature of the post-treatment process may be about 230°C to about 270°C. The temperature of the post-treatment process may be about 230°C to about 260°C. The temperature of the post-treatment process may be about 240°C to about 265°C. The temperature of the post-treatment process may be about 240°C to about 260°C.

The post-treatment process time may be about 30 seconds to about 3 minutes. The post-treatment process time may be about 50 seconds to about 2 minutes. The post-treatment process time may be about 1 minute to about 2 minutes.

Next, a resin extruded by the extruder may be cooled, cut, and processed into post-treated pellets. That is, the resin extruded from the extruder may be reprocessed into a pellet through the cutting operation described above.

The crystallinity of the pellet may be improved in the post-treatment process. In addition, the content of the residue included in the pellet may be adjusted in the post-treatment process. In particular, the content of an oligomer contained in the pellet may be controlled by the post-treatment process. The amount of residual solvent contained in the pellet may be controlled by the post-treatment process.

Accordingly, the post-treatment process may appropriately control the mechanical properties, biodegradability, UV resistance, optical properties, or hydrolysis resistance of the biodegradable polyester resin.

After the pellet is produced, the biodegradable resin may be compounded with the heterogeneous biodegradable resin. In addition, at least one of the applier, the inorganic filler, the light stabilizer, the color-correcting agent and the other additives may be compounded with the biodegradable resin and the heterogeneous biodegradable resin.

The compounding process may be as follows.

The biodegradable resin and the heterogeneous biodegradable resin are mixed with at least one of the applier, the inorganic filler, the heat stabilizer, the color-correcting agent, the metal salt or the other additives and fed into an extruder. The mixed biodegradable resin composition is melted and mixed at about 180°C to about 260°C in the extruder. Next, the melt-mixed biodegradable resin composition may be extruded, cooled, cut, and re-pelletized. By this process, the biodegradable polyester resin composition according to the present invention may be prepared by combining it with the heterogeneous biodegradable resin.

Alternatively, the applier, the inorganic filler, the heat stabilizer, the color-correcting agent, the metal salt and the other additives may be added in the middle of the process of polymerizing the biodegradable resin.

The biodegradable resin solution may include the biodegradable resin composition and organic solvent produced in the various operations. The biodegradable resin composition may be mixed with the organic solvent.

To produce a biodegradable nonwoven fabric, the biodegradable resin composition may be dissolved with the organic solvent in an electrospinning process. The biodegradable resin composition may be dissolved in the organic solvent to produce the biodegradable resin solution.

The organic solvent may include a mixture of two or more solvents. The types of the organic solvents are not

particularly limited, but may include at least one of dichloromethane (DCM) and dimethylformamide (DMF).

The organic solvent may include a mixture of DCM and DMF. The organic solvent may be a mixture of DCM and DMF mixed in a volume ratio of 1:10 to 10:1, 2:9 to 9:2, 3:8 to 8:3, or 4:7 to 7:4. The content of a solid in the biodegradable resin solution may be 10 % by weight to 50 % by weight, 10 % by weight to 40 % by weight, 10 % by weight to 30 % by weight, 10 % by weight to 20 % by weight, or 10 % by weight to 18 % by weight. When the range is satisfied, the biodegradable resin solution may have appropriate surface tension, thereby suppressing the formation of beads in the biodegradable nonwoven fabric.

The weight average molecular weight (Mw) of the biodegradable resin solution may be 50,000 g/mol to 200,000 g/mol, 50,000 g/mol to 180,000 g/mol, 50,000 g/mol to 150,000 g/mol, or 60,000 g/mol to 120,000 g/mol.

The viscosity of the biodegradable resin solution may be 10 cP to 500 cP, 10 cP to 480 cP, 10 cP to 450 cP, 10 cP to 430 cP, or 10 cP to 400 cP.

When the molecular weight and viscosity ranges are satisfied, a discharge amount may be uniform and continuous fibers may be formed.

The biodegradable resin solution may have a surface tension of 10 $mM/m^{-1}$ to 50 $mM/m^{-1}$, 10 $mM/m^{-1}$ to 45 $mM/m^{-1}$, 10 $mM/m^{-1}$ to 40 $mM/m^{-1}$, or 20 $mM/m^{-1}$ to 40 $mM/m^{-1}$. When the range is satisfied, a uniform nano-sized fiber phase may be formed. In addition, the nano-sized fiber phase may be formed continuously.

The method of manufacturing a biodegradable nonwoven fabric according to the present invention includes an operation of preparing a biodegradable resin solution including a biodegradable resin composition, which contains a first biodegradable resin, and an organic solvent, and then applying a voltage to the biodegradable resin solution to spin the biodegradable resin solution.

FIG. 2 schematically illustrates an apparatus for manufacturing a biodegradable nonwoven fabric by electrospinning according to an embodiment. Referring to FIG. 2, the apparatus 10 may include a storage 1 and nozzle part 2 for storing and moving the biodegradable resin solution. The storage 1 may include a pump, for example, a syringe pump. The biodegradable resin solution may be moved to the nozzle part 2 by the syringe pump.

An electric charge may be induced on the surface of a droplet of the biodegradable resin solution moved to the nozzle part 2 by the voltage generation apparatus. The electric charge generated on the surface of the biodegradable resin solution may generate a force opposite to the surface tension of the biodegradable resin solution.

As the intensity of the electric field generated by the voltage generation apparatus increases, the hemisphere of the biodegradable resin solution formed at the end of the nozzle part 2 may be elongated.

The hemisphere may be formed into a cone shape in the form of a Taylor cone. When the charge repulsion of the biodegradable resin solution overcomes the surface tension of the hemisphere of the biodegradable resin solution, the charged biodegradable resin solution may be spun from the end of the nozzle part 2.

In the operation of spinning the biodegradable resin solution, a voltage of 5 kV to 50 kV, 10 kV to 50 kV, 15 kV to 50 kV, 15 kV to 40 kV, 15 kV to 35 kV, or 15 kV to 30 kV may be applied to the biodegradable resin solution. When the range is satisfied, a Taylor cone shape may be smoothly formed. In addition, a uniform nano-sized fiber phase may be formed, and the formation of beads in the biodegradable nonwoven fabric may be suppressed.

In the operation of spinning the biodegradable resin solution, the discharge rate of the biodegradable resin solution may be 0.1 mL/min to 5.0 mL/min, 0.1 mL/min to 4.0 mL/min, 0.1 mL/min to 3.0 mL/min, 0.1 mL/min to 2.0 mL/min, or 0.1 mL/min to 1.0 mL/min. When the range is satisfied, the polarization of the biodegradable resin solution may smoothly occur, so that the formation of a powder and beads in the biodegradable nonwoven fabric may be suppressed.

The apparatus for spinning the biodegradable resin solution may include a first region 3 from which the biodegradable resin solution is discharged; and a second region 4 spaced apart from the first region 3 and including a yarn produced from the biodegradable resin solution discharged from the first region 3. The biodegradable resin solution may be discharged from the first region 3 as a charged jet, and the discharged jet may be connected to the preceding jet by viscosity to form a continuous jet 5. In addition, the jet 5 may be manufactured into a yarn by evaporating the solvent contained in the biodegradable resin solution when it moves in the direction of gravity through the air. The yarn may be randomly stacked in the second region 4 to form the biodegradable nonwoven fabric.

A distance A between the first region 3 and the second region 4 may be 50 mm to 1,000 mm, 50 mm to 900 mm, 100 mm to 900 mm, 100 mm to 800 mm, 100 mm to 700 mm, 100 mm to 600 mm, or 100 mm to 500 mm. When the range is satisfied, the solvent contained in the biodegradable resin solution may be sufficiently evaporated so that nano-sized yarns may be produced and the formation of beads in the biodegradable nonwoven fabric may be suppressed.

The method of manufacturing a biodegradable nonwoven fabric may further include an operation of spinning the biodegradable resin solution to produce a biodegradable nonwoven fabric, and then drying the biodegradable nonwoven fabric. By the drying operation, the solvent contained in the biodegradable resin solution may be more effectively evaporated, so that a biodegradable nonwoven fabric including nano-sized yarns with improved uniformity may be manufactured.

The drying may be performed at 10 °C to 40 °C, 15 °C to 40 °C, 15 °C to 35 °C, 15 °C to 30 °C, preferably at room temperature. The drying time may be 10 minutes to 60 minutes, 10 minutes to 50 minutes, 10 minutes to 64 minutes, or 10

minutes to 30 minutes.

The biodegradable nonwoven fabric according to the present invention includes a first biodegradable resin including diol, aromatic dicarboxylic acid and aliphatic dicarboxylic acid, a biodegradable resin composition including the first biodegradable resin, and a yarn including the biodegradable resin composition and having a diameter of 50 nm to 1,000 nm, wherein the biodegradable resin composition has an electrical resistance of 3 MΩ to 10 MΩ in a molten state.

The first biodegradable resin and the biodegradable resin composition may be the same as the first biodegradable resin and biodegradable resin composition described above.

The biodegradable nonwoven fabric contains yarn having a diameter of 1 nm to 1,000 nm, 5 nm to 1,000 nm, 10 nm to 1,000 nm, 20 nm to 1,000 nm, 30 nm to 1,000 nm, 40 nm to 1,000 nm, or 50 nm to 1,000 nm. The electrical resistance of the biodegradable resin composition in a molten state may be 1 MΩ to 15 MΩ, 1 MΩ to 14 MΩ, 1 MΩ to 13 MΩ, 1 MΩ to 12 MΩ, 1 MΩ to 11 MΩ, 1 MΩ to 10 MΩ, 2 MΩ to 10 MΩ, or 3 MΩ to 10 MΩ. When these ranges are satisfied, a biodegradable nonwoven fabric is lightweight and has a high surface area and porosity, so it may be applied to products that require hygroscopicity.

Based on the total weight of the yarn, an organic solvent may be included in a content of 100 ppm or less, 90 ppm or less, 80 ppm or less, 50 ppm or less, 30 ppm or less, 10 ppm or less, or 0.1 ppm to 10 ppm. The organic solvent may be the same as the organic solvent described above. When these ranges are satisfied, a yarn having a uniform diameter may be produced, so that the product reliability of a biodegradable nonwoven fabric produced from the yarn may be improved.

The yarn may include an applier. The applier may be an electrostatic applier. The applier may suppress the formation of beads in the biodegradable nonwoven fabric.

The type of the applier is not particularly limited, but may be at least one of potassium acetate ($CH_3COOK$) and magnesium acetate ($Mg(CH_3COO)$).

Based on the total weight of the yarn, the content of the applier may be 1 ppm to 500 ppm, 1 ppm to 400 ppm, 5 ppm to 400 ppm, 5 ppm to 300 ppm, 7 ppm to 300 ppm, 7 ppm to 200 ppm, 7 ppm to 150 ppm, 9 ppm to 150 ppm, 10 ppm to 150 ppm, or 10 ppm to 100 ppm. When these ranges are satisfied, the biodegradable nonwoven fabric is lightweight and has a high surface area and porosity, so it may be applied to products that require hygroscopicity.

The biodegradable resin composition according to the present invention includes a biodegradable resin including diol, aromatic dicarboxylic acid, and aliphatic dicarboxylic acid. The biodegradable resin composition has an electrical resistance of 3 MΩ to 10 MΩ in a molten state.

The diol, the aromatic dicarboxylic acid, and the aliphatic dicarboxylic acid may be the same as the diol, aromatic dicarboxylic acid, and aliphatic dicarboxylic acid described above.

The biodegradable resin composition may include an applier. The applier may be the same as the applier described above.

Hereinafter, the present invention will be described in more detail based on the following examples and comparative examples. However, the examples and comparative examples are provided only as examples to describe the present invention in more detail, and the present invention is not limited by the following examples and comparative examples.

## Preparation Example

## Preparation of pretreated nanocellulose

Dry powder-type cellulose nanocrystals (NVC-100, Manufacturer: Celluforce) having a particle size of about 1 $\mu$m to about 50 $\mu$m were dispersed in water at 1 % by weight, and then sonicated at an output of 20,000 J/s for 1 minute using a tip-type ultrasonic disperser, thereby producing pretreated nanocellulose.

## Preparation of PBAT resin

### 1. Preparation of PBAT resin #1

- First operation: Pretreating to obtain slurry

In a catalyst-free state, the nanocellulose pretreated according to the preparation example, a metal salt, a branching agent, ester polyol, 1,4-butanediol (1,4-BDO) and terephthalic acid (TPA) were mixed and fed into a slurry tank (the bottom of the slurry tank was an anchor type, the height to an agitator was 40 mm, and three rotary blades were provided). Here, a molar ratio of the 1,4-butanediol (1,4-BDO) to the terephthalic acid (TPA) was 1.4:1, and the $D_{50}$ of the terephthalic acid (TPA) was 130 $\mu$m. The mixture fed into the slurry tank was stirred at 60°C and 100 rpm for 1 hour, and a slurry was obtained without phase separation. The contents of the pretreated nanocellulose, the metal salt, the branching agent and the ester polyol are shown in Table 1 below.

- Second operation: Obtaining prepolymer

The slurry obtained in the first operation was fed into a reactor through a supply line, a titanium-based catalyst, tetrabutyl titanate (Dupont, manufactured by Tyzor TnBT), was fed at 250 ppm based on the total weight of the slurry into the reactor, followed by performing first esterification at 220°C under normal pressure for about 1 hour and 30 minutes until 95% of by-product water was discharged.

To the first esterification reaction product, 53 mol% of 1,4-butanediol (1,4-BDO) based on the total number of moles of the diol component, 53 mol% of adipic acid (AA) based on the total number of moles of the dicarboxylic acid component, and 200 ppm of a titanium-based catalyst, tetrabutyl titanate (Dupont, manufactured by Tyzor TnBT), based on the total weight of moles of the diol and dicarboxylic acid components were added. Next, a second esterification reaction was performed at 220°C and under normal pressure for about 2 hours 30 minutes until 95% of by-product water was discharged, thereby producing a prepolymer having a number average molecular weight of 5,500 g/mol.

- Third operation: Performing polycondensation reaction

150 ppm of a titanium-based catalyst, tetrabutyl titanate (Dupont, manufactured by Tyzor TnBT), and 500 ppm of a triethylene phosphate stabilizer were added based on the total weight of the prepolymer obtained in the second operationand then stabilized for about 10 minutes. Next, after raising the temperature to 240 °C, a polycondensation reaction was performed under 0.5 torrs for 2 hours, thereby producing a polymer having a number average molecular weight of 25,000 g/mol. Next, the polymer was cooled to 5 °C and cut with a pellet cutter, thereby obtaining PBAT resin #1 pellet.

**2. Production of PBAT resins #2 to #5**

PBAT resin #2 to #5 pellets were manufactured in the same process as in the production process of the PBAT resin #1, except that components and contents shown in the following Table 1 and the temperatures and times of the first and second esterification reactions and the temperatures and times of the polycondensation reaction shown in the following Table 2 were used.

Table 1

| Classification | 1,4-BDO1) | TPA2) | AA3) | CNC4) | Metal salt5) | Branching agent | | Ester polyol7) |
|---|---|---|---|---|---|---|---|---|
| | | | | | | Glycerol | TMA6) | |
| Unit | mol % | | | ppm8) | parts by weight9) | | | |
| PBAT resin #1 | 120 | 47 | 53 | 900 | 0.01 | 1 | - | - |
| PBAT resin #2 | 120 | 47 | 53 | 100 | 0.01 | - | 1 | - |
| PBAT resin #3 | 120 | 50 | 50 | 50 | 0.01 | - | - | 15 |
| PBAT resin #4 | 120 | 48 | 52 | 500 | 0.01 | - | - | - |
| PBAT resin #5 | 140 | 60 | 40 | 10 | 0.01 | 1 | - | - |

1) 1,4-BDO: 1,4-butanediol
2) TPA: Terephthalic acid
3) AA: Adipic acid
4) CNC: Pretreated nanocellulose
5) Metal salt: Iron (II) acetate
6) TMA: Trimellitic anhydride
7) Ester polyol: UNION CHEMICALS, INC., U-1615
8) ppm: Based on total weigh of 1,4-BDO, TPA and AA
9) Parts by weight: Based on 100 parts by weight of polymer

Table 2

| Classification | First esterification reaction | | Second esterification reaction | | Polycondensation reaction | |
|---|---|---|---|---|---|---|
| | Temperature | Time | Temperature | Time | Temperature | Time |
| Unit | °C | h | °C | h | °C | h |
| PBAT resin #1 | 220 | 1.5 | 220 | 2.5 | 240 | 2 |
| PBAT resin #2 | 210 | 1.5 | 210 | 2.5 | 240 | 2.5 |
| PBAT resin #3 | 220 | 1.5 | 220 | 2.5 | 240 | 2.5 |
| PBAT resin #4 | 210 | 1.5 | 210 | 2.5 | 250 | 2 |
| PBAT resin #5 | 230 | 1.5 | 230 | 2.5 | 250 | 2 |

**Preparation of biodegradable resin composition**

**1. Preparation of biodegradable resin composition #1**

A raw material composition was prepared using components and contents shown in the following Table 3. Next, the raw material composition was fed into a T-die extrusion molding device (ϕ 20 mm, L/D=25, manufactured by Toyo Seiki Seisaku-sho, Ltd.) as an extrusion molding machine equipped with a twin screw, and kneaded at 160 °C, thereby producing a pelletized biodegradable resin composition #1.

**2. Preparation of biodegradable resin compositions #2 to #9**

Biodegradable resin composition #2 to #9 pellets were prepared in the same process as in the preparation process of the biodegradable resin composition #1, except that components and contents shown in the following Table 3 were used.

Table 3

| Classification | PBAT | PLA1) | $TiO_2$2) | Applier3) | Antioxidant4) | Chain extender5) |
|---|---|---|---|---|---|---|
| Unit | % by weight | | | | | |
| Biodegradable resin composition #1 | PBAT resin #1 45 | 53.2 | 0.3 | 0.005 | 0.995 | 0.5 |
| Biodegradable resin composition #2 | PBAT resin #1 27 | 61.5 | 1 | 0.005 | 0.995 | 0.5 |
| Biodegradable resin composition #3 | PBAT resin #2 45 | 52.5 | 1 | 0.005 | 0.995 | 0.5 |
| Biodegradable resin composition #4 | PBAT resin #2 27 | 61.5 | 1 | 0.005 | 0.995 | 0.5 |
| Biodegradable resin composition #5 | PBAT resin #3 40 | 56.5 | 2 | 0.003 | 0.997 | 0.5 |
| Biodegradable resin composition #6 | PBAT resin #4 40 | 56.5 | 2 | 0.003 | 0.997 | 0.5 |
| Biodegradable resin composition #7 | PBAT resin #5 40 | 56.5 | 2 | 0.003 | 0.997 | 0.5 |
| Biodegradable resin composition #8 | - | 100 | - | - | - | - |
| Biodegradable resin composition #9 | - | 90 | 5 | - | 3 | 2 |
| 1) PLA: Natureworks LLC, 4032D<br>2) $TiO_2$: Anatase, average diameter 0.25 $\mu$m | | | | | | |

(continued)

| Classification | PBAT | PLA1) | $TiO_2$2) | Applier3) | Antioxidant4) | Chain extender5) |
|---|---|---|---|---|---|---|
| Unit | % by weight | | | | | |
| 3) Applier: Potassium acetate ($CH_3COOK$)<br>4) Antioxidant: Phenolic antioxidant, AO-60<br>5) Chain extender: BASF company, Joncryl ADR 4400 | | | | | | |

## Examples

### Example 1

The biodegradable resin composition #1 was dissolved in an organic solvent in which dichloromethane (DCM) and dimethylformamide (DMF) were mixed in a volume ratio of 3:2, thereby preparing a biodegradable resin solution. The content of a solid in the biodegradable resin solution was 14 % by weight. Next, the biodegradable resin solution was spun at a voltage of about 25 kV, a radiation distance of about 15 cm and a solution release rate of about 0.5 ml/min under conditions of a temperature of about 25 °C and a relative humidity of about 28 %, so that a sheet-shaped biodegradable nonwoven fabric containing nanoyarn was produced to a thickness of about 0.5 mm.

### Example 2

A biodegradable nonwoven fabric was produced in the same manner as in Example 1 except that the nanoyarn of Example 1 was dried at room temperature for 30 minutes, and then manufactured into a sheet-shaped biodegradable nonwoven fabric having a thickness of about 0.5 mm.

### Examples 3 to 14 and Comparative Examples 1 to 4

A biodegradable nonwoven fabric was produced in the same manner as in Example 1 except that the biodegradable resin composition, temperature, relative humidity, voltage, radiation distance, and solution release rate shown in Table 4 below were used.

Table 4

| Classification | Biodegradable resin composition | Temperature | Relative humidity | Voltage | Radiation distance | Solution release rate |
|---|---|---|---|---|---|---|
| Unit | - | °C | % | kV | cm | mℓ/min |
| Example 1 | Biodegradable resin composition #1 | 25 | 28 | 25 | 15 | 0.5 |
| Example 2 | Biodegradable resin composition #1 | 25 | 28 | 25 | 15 | 0.5 |
| Example 3 | Biodegradable resin composition #2 | 25 | 28 | 15 | 20 | 0.1 |
| Example 4 | Biodegradable resin composition #2 | 25 | 28 | 30 | 20 | 1.0 |
| Example 5 | Biodegradable resin composition #2 | 25 | 28 | 20 | 20 | 0.5 |
| Example 6 | Biodegradable resin composition #3 | 25 | 28 | 25 | 15 | 0.6 |
| Example 7 | Biodegradable resin composition #3 | 25 | 28 | 20 | 15 | 0.3 |
| Example 8 | Biodegradable resin composition #3 | 25 | 28 | 20 | 15 | 0.4 |

(continued)

| Classification | Biodegradable resin composition | Temperature | Relative humidity | Voltage | Radiation distance | Solution release rate |
|---|---|---|---|---|---|---|
| Unit | - | °C | % | kV | cm | mℓ/min |
| Example 9 | Biodegradable resin composition #4 | 25 | 28 | 20 | 15 | 0.5 |
| Example 10 | Biodegradable resin composition #4 | 25 | 28 | 25 | 20 | 0.3 |
| Example 11 | Biodegradable resin composition #4 | 25 | 28 | 25 | 20 | 1.0 |
| Example 12 | Biodegradable resin composition #5 | 25 | 28 | 30 | 20 | 0.5 |
| Example 13 | Biodegradable resin composition #6 | 25 | 28 | 15 | 20 | 0.5 |
| Example 14 | Biodegradable resin composition #7 | 25 | 28 | 30 | 20 | 0.5 |
| Comparative Example 1 | Biodegradable resin composition #8 | 25 | 28 | 35 | 65 | 3.0 |
| Comparative Example 2 | Biodegradable resin composition #8 | 25 | 28 | 35 | 65 | 3.0 |
| Comparative Example 3 | Biodegradable resin composition #9 | 25 | 28 | 5 | 7 | 0.05 |
| Comparative Example 4 | Biodegradable resin composition #9 | 25 | 28 | 5 | 7 | 0.05 |

## Experimental Examples

**Experimental Example 1 - Electrical** resistance in molten state

Eachy of the biodegradable resin compositions #1 to #9 was melted at about 240°C under a nitrogen atmosphere, and then bubbles were removed. Next, a platinum electrode was inserted into each of the molten resin compositions, and then an electrical resistance in a molten state was measured at about 50 V for about 120 sec. The electrical resistance in the molten state was calculated according to Equation 10 below, and results are summarized in Table 5 below:

Equation 10

$$\text{Electrical resistance}(M\Omega)\text{ in molten state} = A/L \times V/I$$

In Equation 10, A is the area ($cm^2$) of electrodes, L is a distance between the electrodes, I is an applied current, and V is an applied voltage.

**Experimental Example 2** - **Biodegradability**

Each of the biodegradable resin compositions #1 to #9 was manufactured into flakes with a thickness of 300 $\mu$m and a size of 30 mm × 30 mm, and the initial number average molecular weight of the flakes was measured using the following equipment and measurement conditions for gel permeation chromatography (GPC).

Next, the flakes were placed at a temperature of 60 °C and a humidity of 90 % for 63 days under the following compost conditions, and then the number average molecular weight thereof was measured using the following equipment and measurement conditions for gel permeation chromatography (GPC). A value obtained by dividing a difference between the initial number average molecular weight and the number average molecular weight after 63 days by the initial number average molecular weight was derived as a biodegradability. Results are shown in Table 5 below.

- Equipment and measurement conditions of gel permeation chromatography (GPC) Sample pretreatment: 0.035 mg of manufactured flakes was dissolved in 1.5 ml of THF

  Measurement apparatus: e2695 manufactured by Waters Company
  Flow rate: 1 ml/min in THF
  Flow amount: 50 $\mu\ell$
  Column Temp: 40 °C
  Detector: ELSD
  Column: Styragel Column HR 5E, HR4, HR2

- Compost conditions

  Manufacturer: Taeheung F&G
  Product name: Geosangto (grade 1 compost by-product fertilizer)
  Compost ingredients: 40% by weight of pig manure, 15% by weight of chicken manure, 37% by weight of sawdust, 5% by weight of zeolite, 3% by weight of microbial agent

**Experimental Example 3 - Residual solvent content**

The content of the solvents (DCM and DMF) remaining in each of the biodegradable nonwoven fabric yarns manufactured in Examples 1 to 14 and Comparative Examples 1 to 4 was measured under the following equipment and measurement conditions using TD-GCMS:

- Equipment and measurement conditions of TD-GCMS

  TD: 8 min, 320°C,
  Trap purge time: 1 min
  Split ratio: 16
  GC: Agilent 7890 A
  MS: Agilent 5975 C
  Column: DB-1
  flow rate(Flow rate): 1 ml/min
  Detector temperature: 300 °C

**Experimental Example 4 - absorbency**

Each of the biodegradable nonwoven fabrics produced in Examples 1 to 14 and Comparative Examples 1 to 4 was manufactured to a size of 100 mm in width and 80 mm in length, and then the initial weight of the nonwoven fabric was measured. Next, each nonwoven fabric was immersed in a saline solution for 20 seconds, and then the weight thereof was measured. In addition, a ratio of the weight of the nonwoven fabric after being immersed relative to the initial weight of the nonwoven fabric was calculated. Results are shown in Table 5 below.

**Experimental Example 5 - Processability**

Whether each of the biodegradable nonwoven fabrics manufactured in Examples 1 to 14 and Comparative Examples 1 to 4 maintained the shape thereof was evaluated based on the following criteria, and results are shown in Table 5 below.

- ◦: Nonwoven fabric shape maintained.
- ×: Nonwoven fabric shape not maintained.

**Experimental Example 6 - Diameter and shape of yarn**

The diameter and shape of each of the biodegradable nonwoven fabric yarns manufactured in Examples 1 to 14 and Comparative Examples 1 to 4 were measured using a scanning electron microscope (SEM). The shape of the yarn was evaluated according to the following criteria, and results are shown in Table 5 below.

- ◎: Continuous fiber

- ◦: Continuous fiber, some beads present
- △: Beads and fibers mixed
- ×: Micron ribbon formed

Table 5

| Classific ation | Biodegra dable resin compositi on | Electri cal resista nce in molte n state | Biodegrada bility | Resid ual solve nt amou nt | Absorb ency | Processa bility | Diam eter of yarn | Sha pe of yar n |
|---|---|---|---|---|---|---|---|---|
| Unit | - | MΩ | % | ppm1) | % | - | nm | - |
| Example 1 | Biodegra dable resin compositi on #1 | 5.70 | 90 | 5 | 1,320 | ○ | 900 | ◎ |
| Example 2 | Biodegra dable resin compositi on #1 | 4.21 | 90 | 2 | 1,540 | ○ | 880 | ◎ |
| Example 3 | Biodegra dable resin compositi on #2 | 5.22 | 90 | 5 | 1,310 | ○ | 910 | ◎ |
| Example 4 | Biodegra dable resin compositi on #2 | 5.13 | 90 | 6 | 1,130 | ○ | 900 | ◎ |
| Example 5 | Biodegra dable resin compositi on #2 | 5.32 | 90 | 5 | 1,120 | ○ | 910 | ◎ |
| Example 6 | Biodegra dable resin compositi on #3 | 5.16 | 90 | 6 | 1,050 | ○ | 900 | ◎ |
| Example 7 | Biodegra dable resin compositi on #3 | 5.15 | 90 | 5 | 1,100 | ○ | 890 | ◎ |
| Example 8 | Biodegra dable resin compositi on #3 | 5.21 | 90 | 6 | 1,050 | ○ | 900 | ◎ |
| Example 9 | Biodegra dable resin compositi on #4 | 5.19 | 90 | 5 | 1,120 | ○ | 910 | ◎ |

(continued)

| Classific ation | Biodegra dable resin compositi on | Electri cal resista nce in molte n state | Biodegrada bility | Resid ual solve nt amou nt | Absorb ency | Processa bility | Diam eter of yarn | Sha pe of yar n |
|---|---|---|---|---|---|---|---|---|
| Unit | - | MΩ | % | ppm1) | % | - | nm | - |
| Example 10 | Biodegra dable resin compositi on #4 | 5.15 | 90 | 5 | 1,210 | ○ | 910 | ◎ |
| Example 11 | Biodegra dable resin composition #4 | 5.23 | 90 | 5 | 1,220 | ○ | 900 | ◎ |
| Example 12 | Biodegra dable resin compositi on #5 | 5.21 | 93 | 7 | 1,330 | ○ | 900 | ◎ |
| Example 13 | Biodegra dable resin compositi on #6 | 5.14 | 93 | 5 | 1,110 | ○ | 910 | ◎ |
| Example 14 | Biodegra dable resin compositi on #7 | 5.13 | 93 | 7 | 1,250 | ○ | 900 | ◎ |
| Compara tive Example 1 | Biodegra dable resin compositi on #8 | 17.2 | 80 | 15 | 2,105 | × | 2,000 | × |
| Compara tive Example 2 | Biodegra dable resin compositi on #8 | 13.2 | 80 | 20 | 2,105 | × | 2,200 | × |
| Compara tive Example 3 | Biodegra dable resin compositi on #9 | 15.5 | 85 | 620 | 2,105 | × | 1,400 | Δ |
| Compara tive Example 4 | Biodegra dable resin compositi on #9 | 15.2 | 85 | 610 | 2,105 | × | 1,600 | Δ |
| 1) ppm: Based on total weight of nonwoven fabric yarn | | | | | | | | |

As shown in Tables 4 and 5, it was confirmed that the biodegradable nonwoven fabrics of Examples 1 to 14 produced by applying voltage to the solution prepared by mixing the biodegradable resin composition including diol, aromatic dicarboxylic acid, and aliphatic dicarboxylic acid with the organic solvent exhibited excellent biodegradability and yarn quality, compared to the biodegradable nonwoven fabrics of Comparative Examples 1 to 4, thereby applicable to products requiring high absorbency.

More specifically, FIG. 3 illustrates a photograph of the biodegradable nonwoven fabric manufactured in Example 1, FIG. 4 illustrates a photograph of the biodegradable nonwoven fabric manufactured in Comparative Example 1. It was confirmed that the biodegradable nonwoven fabric of Comparative Example 1, compared to Example 1, had a large

number of beads, making it unsuitable for use as a nonwoven fabric.

Description of Symbols

1: storage
2: nozzle part
3: first region
4: second region
5: jet
10: apparatus
100: slurry agitator
200: esterification reaction part
300: polycondensation reaction part
400: post-treatment part
510: first recovery part
520: second recovery part

## Claims

**1.** A method of manufacturing a biodegradable nonwoven fabric, the method comprising:

preparing a biodegradable resin solution comprising an organic solvent and a biodegradable resin composition comprising a first biodegradable resin; and
spinning the biodegradable resin solution by applying a voltage to the biodegradable resin solution,
wherein the first biodegradable resin comprises a diol, an aromatic dicarboxylic acid, and an aliphatic dicarboxylic acid.

**2.** The method according to claim 1, wherein, in the spinning operation, the voltage applied to the biodegradable resin solution is 15 kV to 30 kV.

**3.** The method according to claim 1, wherein in the spinning operation, a release rate of the biodegradable resin solution is 0.1 mL/min to 1.0 mL/min.

**4.** The method according to claim 1, wherein, in the spinning, a first region for discharging the biodegradable resin solution; and a second region spaced apart from the first region in a gravity direction and comprising a yarn produced from the biodegradable resin solution discharged from the first region are used, and wherein a distance between the first and second regions is 100 mm to 500 mm.

**5.** The method according to claim 1, wherein the biodegradable resin composition
further comprises a second biodegradable resin, and
wherein the second biodegradable resin comprises one or more selected from the group consisting of polybutylene succinate, polylactic acid, polybutylene adipate, polybutylene succinate-adipate, polybutylene succinate-terephthalate, polyhydroxybutyrate-valerate, polycaprolactone, and polybutylene succinate adipate terephthalate.

**6.** The method according to claim 1, wherein the biodegradable resin composition
comprises an applier, and
wherein the applier comprises a content of 10 ppm to 100 ppm based on a total weight of the biodegradable resin composition.

**7.** The method according to claim 1, wherein an electrical resistance of the biodegradable resin composition in a molten state is 3 MΩ to 10 MΩ.

**8.** The method according to claim 1, further comprising: after spinning the biodegradable resin solution, drying the spun biodegradable resin solution.

**9.** A biodegradable nonwoven fabric comprising:

a first biodegradable resin comprising diol, aromatic dicarboxylic acid and aliphatic dicarboxylic acid;
a biodegradable resin composition comprising the first biodegradable resin; and
a yarn comprising the biodegradable resin composition and having a diameter of 50 nm to 1,000 nm,
wherein the biodegradable resin composition has an electrical resistance of 3 MΩ to 10 MΩ in a molten state.

**10.** The biodegradable nonwoven fabric according to claim 9, further comprising an organic solvent in a content of 10 ppm or less based on a total weight of the yarn.

**11.** The biodegradable nonwoven fabric according to claim 9, wherein the yarn comprises an applier.

**12.** A biodegradable resin composition comprising a biodegradable resin comprising
diol, aromatic dicarboxylic acid, and aliphatic dicarboxylic acid,
wherein the biodegradable resin composition has an electrical resistance of 3 MΩ to 10 MΩ in a molten state.

**13.** The biodegradable resin composition according to claim 12, wherein the biodegradable resin composition comprises an applier.

**14.** A method of manufacturing a biodegradable nonwoven fabric, the method comprising:

preparing a biodegradable resin solution comprising first and second biodegradable resins; and
spinning the biodegradable resin solution,
wherein the first biodegradable resin comprises a diol, an aromatic dicarboxylic acid, and an aliphatic dicarboxylic acid,
wherein the second biodegradable resin comprises one or more selected from the group consisting of polybutylene succinate, polylactic acid, polybutylene adipate, polybutylene succinate-adipate, polybutylene succinate-terephthalate, polyhydroxybutyrate-valerate, polycaprolactone, and polybutylene succinate adipate terephthalate, and
wherein a voltage is applied to the biodegradable resin during the spinning.

FIG. 1

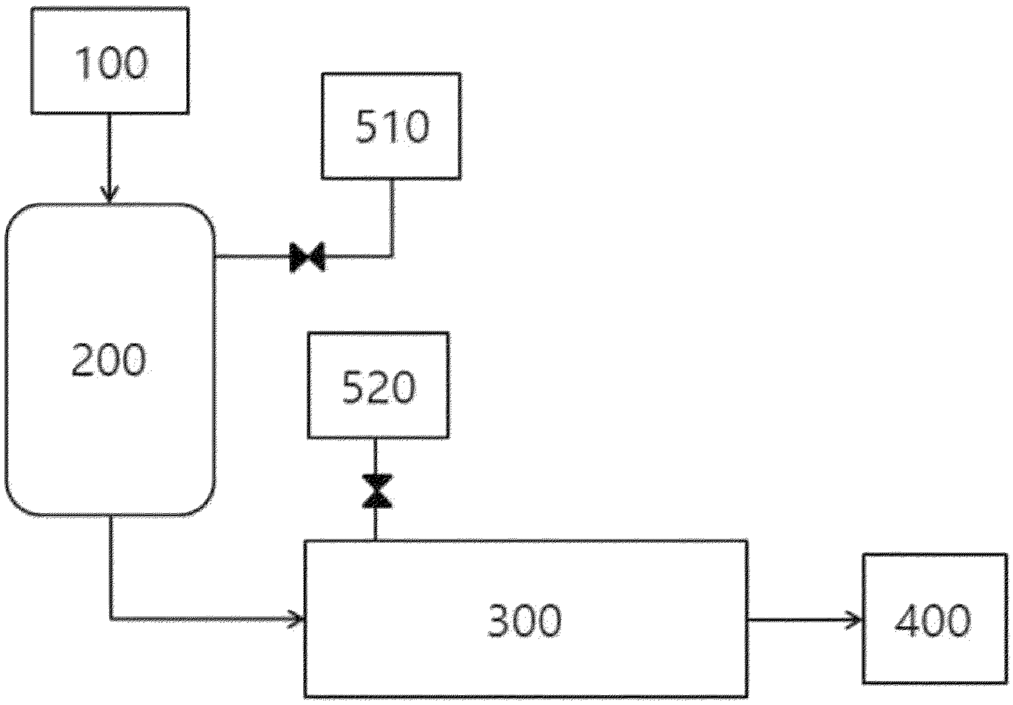

FIG. 2

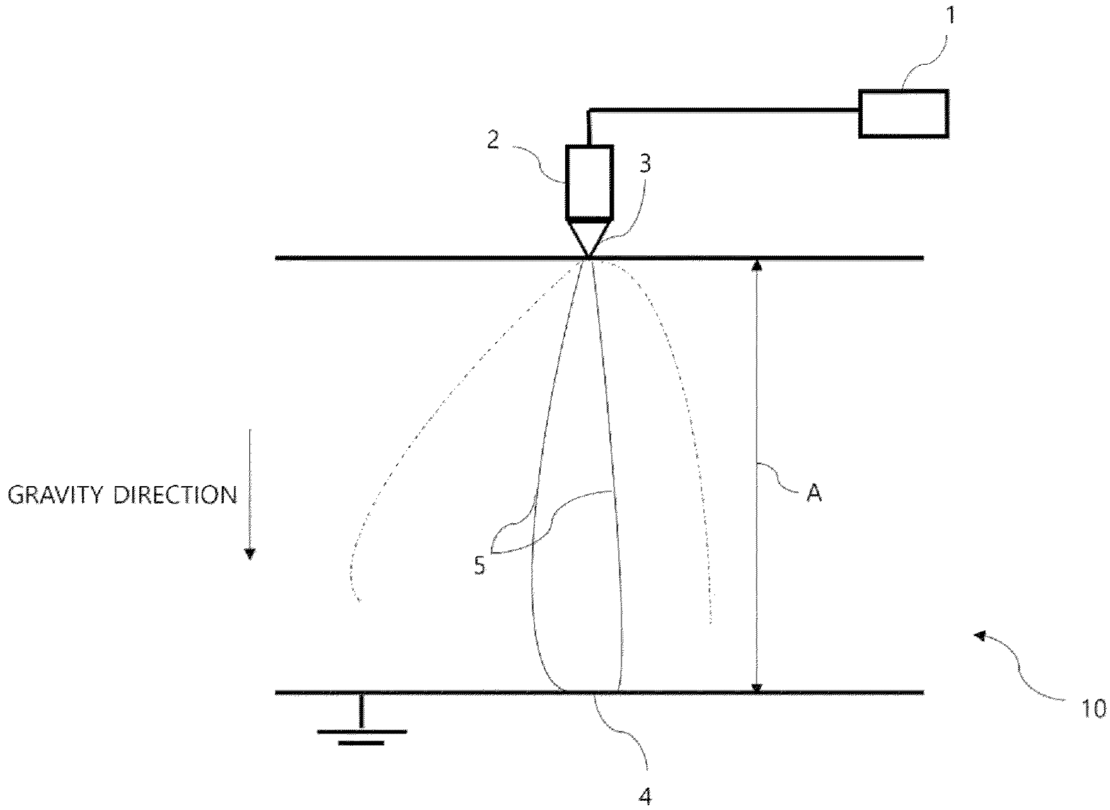


FIG. 3

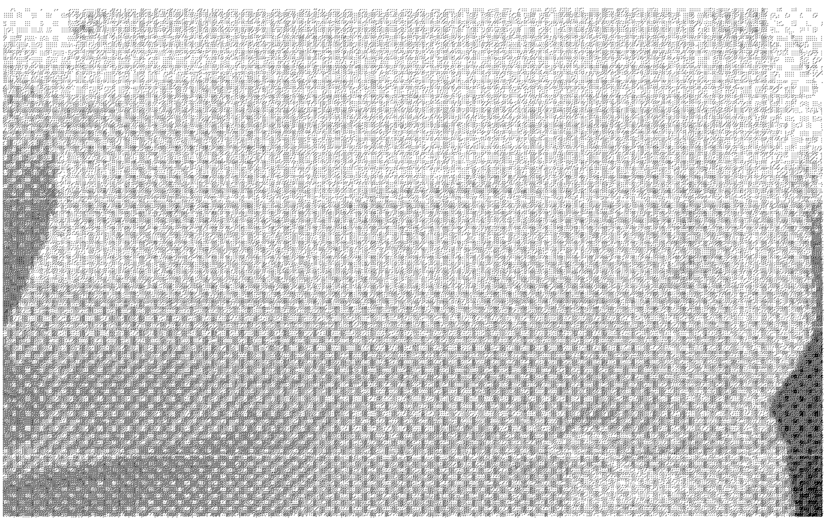

FIG. 4

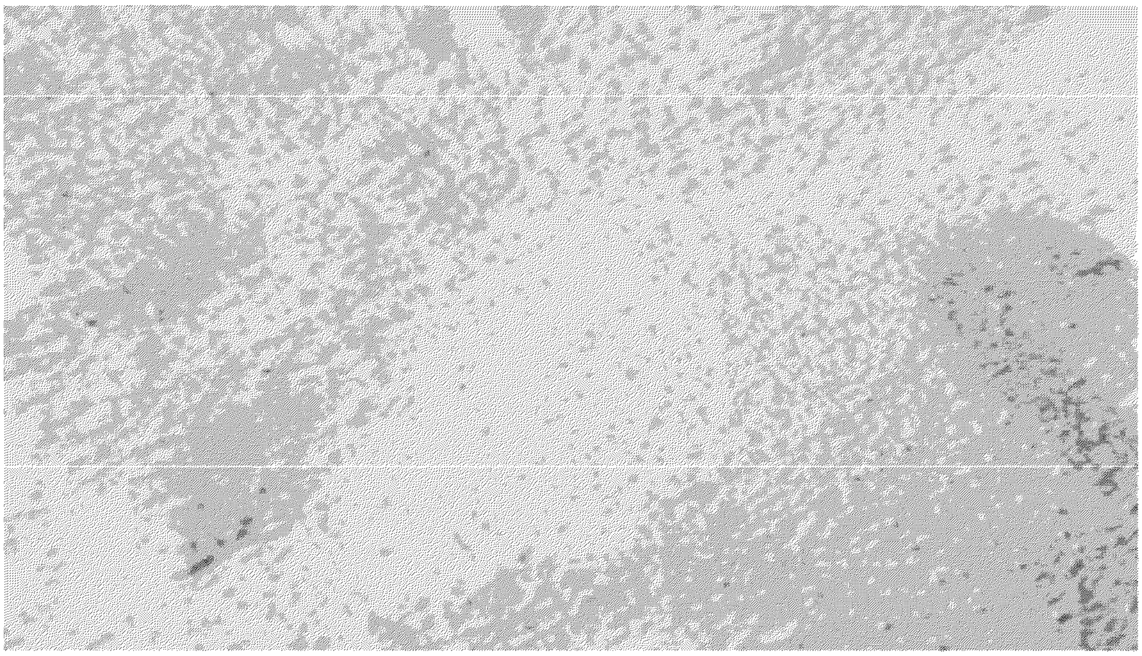

Europäisches Patentamt
European Patent Office
Office européen des brevets

# EUROPEAN SEARCH REPORT

Application Number
EP 24 19 5762

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 181 711 A (SUZHOU HESUMEI TECH CO LTD) 30 July 2021 (2021-07-30)<br>* paragraph [0033]; example 4 *<br>----- | 1-14 | INV.<br>D01D5/00<br>D01F6/62<br>D01F6/84<br>D01F6/92<br>D04H1/435<br>D04H1/728 |
| X | WO 2016/203166 A1 (INST NAT SCIENCES APPLIQUEES LYON [FR]; AUDIBET MARC [FR]) 22 December 2016 (2016-12-22)<br>* page 13, lines 13-28 *<br>* page 2, last paragraph *<br>----- | 1-4,6,<br>9-14 | |
| | | | TECHNICAL FIELDS SEARCHED (IPC) |
| | | | D01D<br>D04H<br>D01F |

The present search report has been drawn up for all claims

2

| Place of search | Date of completion of the search | Examiner |
|---|---|---|
| The Hague | 18 February 2025 | Beyazit, Selim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 19 5762

This annex lists the patent family members relating to the patent documents cited in the above-mentioned European search report. The members are as contained in the European Patent Office EDP file on
The European Patent Office is in no way liable for these particulars which are merely given for the purpose of information.

18-02-2025

| Patent document cited in search report | Publication date | Patent family member(s) | Publication date |
|---|---|---|---|
| CN 113181711 A | 30-07-2021 | NONE | |
| WO 2016203166 A1 | 22-12-2016 | FR 3037602 A1 | 23-12-2016 |
| | | WO 2016203166 A1 | 22-12-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4797468 A
- US 5470944 A
- US 5770682 A
- US 5821327 A
- US 5880254 A
- US 6326458 B